(19) Europäisches Patentamt
European Patent Office
Office européen des brevets

(11) **EP 3 889 921 A1**

(12) **EUROPÄISCHE PATENTANMELDUNG**

(43) Veröffentlichungstag:
**06.10.2021  Patentblatt 2021/40**

(51) Int Cl.:
**G07D 7/00** (2016.01)　　　**G07D 7/01** (2016.01)
**G07C 9/00** (2020.01)　　　**G07C 9/20** (2020.01)
**G06F 21/31** (2013.01)　　　**H04L 9/32** (2006.01)
**G06N 10/00** (2019.01)

(21) Anmeldenummer: **21166664.9**

(22) Anmeldetag: **01.04.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **03.04.2020  DE 102020109446**

(71) Anmelder: **Bundesdruckerei GmbH**
**10969 Berlin (DE)**

(72) Erfinder:
• **WILKE, Andreas**
**13509 Berlin (DE)**
• **KOMAROV, Ilya**
**13507 Berlin (DE)**
• **PAESCHKE, Manfred**
**16348 Wandlitz (DE)**

(74) Vertreter: **Richardt Patentanwälte PartG mbB**
**Wilhelmstraße 7**
**65185 Wiesbaden (DE)**

Bemerkungen:
Die Patentansprüche wurden nach dem Anmeldetag eingereicht (R. 68(4) EPÜ).

(54) **PRÜFOBJEKT MIT ZEITFENSTERBEZOGENER ANTWORTFUNKTION**

(57)　Die Erfindung betrifft ein Verfahren zum Nachweis der Integrität eines physischen Objektes, umfassend:
- Bereitstellung (202) eines Prüfobjektes (100), das dazu ausgebildet ist, eine Antwortfunktion (122, 130, 136) zu verwenden um eine Antwort zu erzeugen, wobei die Antwortfunktion vom internen Zustand des Prüfobjekts zum Zeitpunkt des Erhalts der Anfrage abhängt, wobei der interne Zustand und die Antwortfunktion durch Prüfobjekt-externe Objekte (150, 502) nicht vorhergesagt werden können;
- Vorhersagen (204) eines ersten internen Zustands (101) des Prüfobjekts innerhalb eines ersten künftigen Zeitfensters (t1) und Vorhersage einer ersten Antwortfunktion (122) für das erste künftige Zeitfenster;
- Ausgabe (206) der vorhergesagte ersten Antwortfunktion an ein Prüfgerät.

Fig. 1A

**Beschreibung**

**Gebiet**

Die Erfindung betrifft ein Verfahren zum Betrieb eines physischen Objekts, das eine Integritätsprüfung ermöglicht ("Prüfobjekt"), sowie ein entsprechendes Prüfobjekt. Bei dem Prüfobjekt kann es sich insbesondere um ein Wert- oder Sicherheitsdokument, HSM oder sonstiges Bauteil, das verwendet wird, um sensible Daten oder Funktionen vor Manipulation und/oder unberechtigtem Zugriff zu schützten, handeln. Besondere Vorteile des Verfahrens ergeben sich unter anderem im Bereich der Abwehr von DOS und DDOS Angriffen.

**Hintergrund**

Es existiert eine große Vielzahl an Anwendungsszenarien, innerhalb welcher es erforderlich ist, die Integrität eines physischen Objekts zu prüfen, bevor weitere Schritte ausgeführt werden.

Beispielsweise werden Sicherheitsdokumente wie z.B. Chipkarten, die als Personal- oder Mitarbeiterausweis dienen, bei der Einreise in ein Land oder beim Betreten des Firmengeländes auf "Echtheit" geprüft, also darauf, ob die Sicherheitsdokumente und die in ihnen gespeicherten Daten nicht durch Unberechtigte manipuliert wurden. Das Auslesen oder gar Ändern der in dem Sicherheitsdokument gespeicherten Daten soll nur wenigen autorisierten Stellen erlaubt sein. Angreifer könnten versuchen, ein Sicherheitsdokument oder Identitätsdokument zu manipulieren, z.B. um sich dadurch Zugriff auf oder Zutritt zu sensiblen Daten bzw. Bereichen zu verschaffen. Um dies zu verhindern, werden die Sicherheitsdokumente, die von Personen verwendet werden um sich auszuweisen geprüft, um festzustellen, ob das Dokument authentisch und nicht manipuliert ist. Nur in diesem Fall wird der Person Zugriff bzw. Zutritt gewährt oder eine sonstige weitere Aktion durchgeführt.

Doch nicht nur Identitätsdokumente sind vielfach Ziel von Angreifern. In vielen technischen Bereichen, z.B. beim Betrieb sensibler Infrastruktureinrichtungen wie z.B. Krankenhäusern, Wasser- und Energieversorgungswerken oder beim Betrieb von automatischen Produktionsstraßen mit Robotern, ist es erforderlich, den Zugriff auf sicherheitskritische Daten und Geräte zu beschränken. Entsprechende Zugriffs- bzw. Zutrittskontrolleinheiten sind häufig Ziele für eine Vielzahl unterschiedlicher Angriffe, die unter anderem darauf abzielen, die manipulierte Kontrolleinheit dazu zu bringen, auch unberechtigten Personen Zugriff auf bzw. Zutritt zu sensiblen Daten oder Bereichen zu ermöglichen. Ein anderes Ziel eines Angriffs auf die Kontrolleinheit kann es sein, möglichst viel über die innere Funktionslogik der Kontrolleinheit zu erfahren, um Sicherheitslücken zu erkennen und diese für einen Angriff zu nutzten.

Eine Angriffsmethode, der besonders schwer beizukommen ist, sind DOS (denial of service) Angriffe, insbesondere DDOS (distributed DOS) Angriffe auf derartige Kontrolleinheiten, da diese die Kontrolleinheit funktional dadurch stilllegen, dass die Kontrolleinheit mit einer sehr großen Zahl an Anfragen in kurzer Zeit zum Absturz gebracht wird. Der Betreiber der Kontrolleinheit wird dadurch oftmals dazu gezwungen, die Zugriffs- bzw. Zutrittskontrolle ersatzweise durch andere Systeme oder durch Menschen durchführen zu lassen. Dieser erzwungene kurzfristige Wechsel des Kontrollverfahrens eröffnet Sicherheitslücken, die sich ein Angreifer zu Nutze machen kann.

**Zusammenfassung**

Der Erfindung liegt die Aufgabe zugrunde, ein verbessertes Verfahren zum Betrieb eines physischen Objektes mit prüfbarer Integrität ("Prüfobjekt") vorzuschlagen, sowie ein entsprechendes Verfahren zur Integritätsprüfung und ein entsprechendes Prüfobjekt.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein Verfahren zum Betrieb eines physischen Objekts, im Folgenden "Prüfobjekt" genannt, dessen Integrität prüfbar ist. Das Verfahren umfasst:

- Bereitstellung des Prüfobjektes. Das Prüfobjekt ist ein physisches Objekt mit spezifischen Eigenschaften:

  ◦ das Prüfobjekt weist einen internen Zustand auf;
  ◦ das Prüfobjekt ist dazu ausgebildet, eine Anfrage mit einer Challenge zu empfangen;
  ◦ das Prüfobjekt ist dazu ausgebildet, eine Antwortfunktion zu verwenden um eine Antwort auf die Anfrage zu erzeugen, wobei die Antwortfunktion vom internen Zustand des Prüfobjekts zum Zeitpunkt des Erhalts der Anfrage abhängt;
  ◦ der interne Zustand und die von diesem abhängige Antwortfunktion können durch Prüfobjekt-externe Objekte nicht vorhergesagt werden;

◦ ein Versuch, den internen Zustand oder die von dem Prüfobjekt verwendete Antwortfunktion durch Zugriff auf das Prüfobjekt festzustellen, verändert den aktuellen internen Zustand und damit auch die von diesem abhängige Antwortfunktion:

- Vorhersagen, durch das Prüfobjekt, eines ersten internen Zustands des Prüfobjekts innerhalb eines ersten künftigen Zeitfensters und Vorhersage einer ersten Antwortfunktion, die das Prüfobjekt zur Beantwortung einer innerhalb des ersten künftigen Zeitfensters empfangenen ersten Anfrage in Abhängigkeit von seinem vorhergesagten ersten internen Zustand verwenden wird;
- Ausgabe, durch das Prüfobjekt, der vorhergesagte ersten Antwortfunktion, um dem Prüfgerät eine Prüfung der Integrität des Prüfobjekts innerhalb des ersten künftigen Zeitfensters unter Verwendung der ausgegebenen, vorhergesagten ersten Antwortfunktion zu ermöglichen.

Diese Merkmale können vorteilhaft sein, da diese Eigenschaften bewirken, dass das Prüfobjekt zwar prüfbar ist, jedoch nur innerhalb definierter Zeitfenster und nur durch diejenigen externen Geräte, an welche die vorhergesagte Antwortfunktion ausgegeben wurde. Die Anmelderin hat erkannt, dass sich bestimmte, spezifische Zustände von physikalischen Objekten, wie sie z.B. bei quantenmechanischen Computern aber auch in Analogrechnern die auf einer Überlagerung von Schwingungen mehrerer Oszillatoren basieren auftreten, nutzbar machen lassen, um ein Prüfobjekt zu schaffen, das einen Objektmaterial-inhärenten Schutz vor unberechtigten Zugriffen auf das Objekt bietet. Dieser objektmaterial-inhärente Schutz kann in weiteren Ausführungsformen auch mit klassischen Rechnern und spezieller Software nachgebildet und erreicht werden, wie an späterer Stelle noch näher ausgeführt werden wird. Der objektmaterial-inhärente Zugriffschutz wird dadurch bewirkt, dass das Objekt während unterschiedlicher Zeitfenster unterschiedliche Antwortfunktionen zur Beantwortung von Anfragen verwendet, wobei die Antwortfunktion, also die Art und Weise, wie das Prüfobjekt eine Challenge verarbeitet, um eine Anfrage zu bearbeiten, vom aktuellen internen Zustand des Prüfobjekts abhängt, wobei dieser interne Zustand von außen nicht in Erfahrung gebracht werden kann. Damit ist es Prüfobjekt-externen Objekten auch nicht möglich, vorherzusagen, wie die Antwortfunktion des Prüfobjekts an einem bestimmten Zeitpunkt in der Zukunft aussehen wird, mit der einzigen Ausnahme, dass das Prüfobjekt selbst, das seinen internen Zustand kennt, die während eines künftigen Zeitfensters zu verwendende Antwortfunktion vorhersagt und ausgibt. Nur ein solches Prüfgerät, dem die während eines Zeitfensters vom Prüfobjekt verwendete Antwortfunktion von dem Prüfobjekt zuvor "freiwillig" mitgeteilt wurde und welches zudem auch die Anfrage innerhalb dieses "legitimen" Zeitfensters an das Prüfobjekt sendet, "weiß", welche Antwortfunktion das Prüfobjekt verwenden wird um die aktuelle Challenge zu verarbeiten um die Antwort zu erzeugen und kann anhand dieses Wissens und durch Analyse der Antwort erkennen, ob die vom Prüfobjekt verwendete Antwortfunktion auch der entspricht, die das Prüfobjekt zuvor ausgegeben/für das aktuelle Zeitfenster angekündigt hat. Das Prüfobjekt bietet eine besonders hohe, da objekt-inhärente Sicherheit dafür, das zwischenzeitlich kein unberechtigter Dritter in manipulierender Weise auf das Prüfobjekt zugegriffen hat. Für den Fall nämlich, dass ein Dritter den internen Zustand des Prüfobjekts durch z.B. eine illegitime Anfrage außerhalb eines erlaubten Zeitfensters oder durch eine sonstige Manipulation des Prüfobjekts den internen Zustand des Prüfobjekts verändert hat, wird das Prüfobjekt notwendigerweise an einem nachfolgenden Zeitfenster für eine legitime Anfrage eine andere Antwortfunktion verwenden als die, die das Prüfobjekt zuvor für eben dieses Zeitfenster ausgegeben hat. Das bedeutet, dass die Challenge mit einer anderen Antwortfunktion verarbeitet wird als mit der für dieses Zeitfenster ausgegebenen und angekündigten Antwortfunktion. Die für eine aktuelle Challenge zurückgegebene Antwort unterscheidet sich also von der Antwort, die ein Prüfgerät auf Basis dieser Challenge und der angekündigten Antwortfunktion erwarten durfte, sodass das Prüfgerät sofort erkennen kann, dass der aktuelle interne Zustand des Prüfobjekts nicht mehr dem erwarteten internen Zustand entspricht. In diesem Fall gilt das Prüfobjekt als korrumpiert und nicht mehr vertrauenswürdig. Falls es sich beim dem Prüfgerät z.B. um einen Mitarbeiterausweis handelt, kann der Ausweis gesperrt werden. Falls es sich bei dem Prüfobjekt um eine Kontrolleinheit einer Schließanlage handelt, kann diese deaktiviert und zu einem anderen technischen Kontrollsystem oder zu einer manuellen Kontrolle der Schließanlage gewechselt werden.

Ausführungsformen der Erfindung können also ein hohes Maß an Verlässlichkeit dafür bieten, dass das Prüfobjekt nicht manipuliert wurde, denn jeder Eingriff, der zu einer Änderung des internen Zustands des Prüfobjektes führt, führt automatisch und unweigerlich zu einer Änderung der verwendeten Antwortfunktion, sodass die Manipulation leicht feststellbar ist.

Ein weiterer Vorteil kann darin bestehen, dass auch DOS und DDOS Angriffen durch die Verwendung legitimer Zeitfenster vorgebeugt wird. Beispielsweise kann das Prüfobjekt dazu ausgebildet sein, außerhalb von Zeitfenstern, für welche das Prüfobjekt eine entsprechende Antwortfunktion ausgegeben hat, keinerlei Anfragen zu beantworten. Zusätzlich oder alternativ dazu nimmt das Prüfobjekt automatisch nach Empfang einer unberechtigten Anfrage außerhalb dieser Zeitfenster einen neuen internen Zustand ein, der nicht nur zur Folge hat, dass die künftig verwendeten Antwortfunktionen andere sind als die ausgegebenen und angekündigten Antwortfunktionen, sondern auch, dass das Prüfobjekt überhaupt noch auf weitere Anfragen reagiert (Selbstsperrung). Dadurch wird verhindert, dass die gesamte Rechenkapazität des Prüfobjekts für die Verarbeitung einer großen Anzahl an Anfragen, die im Zuge eines Angriffs an das Prüfobjekt gesendet werden verwendet wird und damit für andere Aufgaben nicht mehr zur Verfügung steht.

Nach Ausführungsformen erfolgt die Ausgabe der Antwortfunktion und optional auch eine Ausgabe des künftigen Zeitfensters, innerhalb welchem die ausgegebene Antwortfunkton von dem Prüfobjekt verwendet werden wird, nur an Prüfgeräte, die sich zuvor gegenüber dem Prüfobjekt erfolgreich authentifiziert haben, z.B. mittels eines Berechtigungszertifikats oder eines sonstigen Authentifizierungsverfahrens. Zusätzlich oder alternativ dazu wird die Antwortfunktion und optional auch das künftige Zeitfenster über eine geschützte, insbesondere verschlüsselte, Datenverbindung ausgegeben. Beispielsweise kann das Prüfgerät mit dem Prüfobjekt nach erfolgreicher Authentifizierung des Prüfgeräts gegenüber dem Prüfobjekt eine Ende-zu-Ende verschlüsselte Verbindung aufbauen.

Dies kann vorteilhaft sein, da es Angreifern dadurch zusätzlich erschwert wird, eine legitime Anfrage an das Prüfobjekt zu stellen, da den Angreifern die legitimen Zeitfenster, für welche das Prüfobjekt eine gültige Antwortfunktion ausgegeben hat, unbekannt ist.

Nach Ausführungsformen gibt das Prüfobjekt das erste künftige Zeitfenster aus, um dem Prüfgerät eine Prüfung der Integrität des Prüfobjekts innerhalb des ersten künftigen Zeitfensters zu ermöglichen.

Die Ausgabe des ersten künftigen Zeitfensters kann vorteilhaft sein, da hierdurch einem Prüfgerät die Möglichkeit eröffnet wird, zu prüfen, ob das Prüfobjekt sich während des ausgegebenen Zeitfensters tatsächlich in dem internen Zustand befindet, welches das Prüfgerät selbst vorhergesagt hat. Da die vorhergesagte Antwortfunktion vorab von dem Prüfgerät ausgegeben wird ist es nicht erforderlich, dem Prüfgerät zu erlauben, den aktuellen oder künftigen internen Zustand des Prüfobjekts eigenständig durch eigenständige Analyse des Prüfobjekts zu bestimmen. Vielmehr können physikalische Zustände als interne Prüfobjekt-Zustände verwendet werden, welche sich inhärent dem Zugriff externer messender Systeme entziehen, z.B. interne Zustände, die auf einer Verschränkung mehrerer Qubits beruhen.

Nach Ausführungsformen empfängt das Prüfobjekt, die erste Anfrage des Prüfgeräts. Die erste Anfrage beinhaltet eine erste Challenge. Falls die erste Anfrage innerhalb des ersten künftigen Zeitfensters empfangen wird, verwendet das Prüfobjekt die vorhergesagte und ausgegebene erste Antwortfunktion zum Erzeugen der ersten Antwort. Zur Erzeugung der ersten Antwort verwendet das Prüfobjekt außerdem die erste Challenge.

Das Prüfobjekt gibt die erste Antwort an das Prüfgerät zurück. Dies ermöglicht es dem Prüfgerät, die Integrität des Prüfobjekts anhand der ersten Challenge, der ersten veröffentlichten Antwortfunktion und anhand der Antwort zu prüfen.

Das Prüfobjekt ändert seinen internen Zustand. Dies kann z.B. automatisch im Zuge der Erzeugung der ersten Antwort oder danach erfolgen. Der geänderte interne Zustand kann dann vom Prüfobjekt verwendet werden, um seinen künftigen internen Zustand während eines künftigen Zeitfensters und auch eine Antwortfunktion, welche das Prüfobjekt während dieses künftigen Zeitfensters verwendet, vorherzusagen.

Dies kann vorteilhaft sein, da die Änderung des internen Zustands gewährleistet, dass ein Angreifer, dem die erste Antwortfunktion während des ersten Zeitfensters bekannt geworden ist, die verwendet, um Rückschlüsse auf den internen Zustand des Prüfobjekts zu ziehen und anschließend den künftigen Zustand bzw. die künftig zu verwendende Antwortfunktion durch Extrapolation in Erfahrung zu bringen. Da sich der interne Zustand des Prüfobjekts nach der Beantwortung einer Anfrage automatisch ändert, und zwar vorzugsweise auf eine nichtlineare und/oder unvorhersehbare Weise, wird sichergestellt, dass aus den bisher veröffentlichten Antwortfunktionen durch Prüfobjekt-externe Geräte nicht auf künftige interne Zustände und Antwortfunktionen geschlossen werden kann.

Nach Ausführungsformen umfasst das Verfahren folgende Schritte, nachdem der interne Zustand des Prüfobjekts geändert wurde:

- Vorhersagen, durch das Prüfobjekt, eines zweiten internen Zustands des Prüfobjekts innerhalb eines zweiten künftigen Zeitfensters und Vorhersage einer zweiten Antwortfunktion, die das Prüfobjekt zur Beantwortung einer innerhalb des zweiten künftigen Zeitfensters empfangenen zweiten Anfrage in Abhängigkeit von seinem vorhergesagten zweiten internen Zustand verwenden wird;
- Ausgabe, durch das Prüfobjekt, der vorhergesagte zweiten Antwortfunktion, um dem Prüfgerät eine Prüfung der Integrität des Prüfobjekts innerhalb des zweiten künftigen Zeitfensters unter Verwendung der ausgegebenen, vorhergesagten zweiten Antwortfunktion zu ermöglichen;
- optional zudem Ausgabe, durch das Prüfobjekt, des zweiten künftigen Zeitfensters, um dem Prüfgerät eine Prüfung der Integrität des Prüfobjekts innerhalb des zweiten künftigen Zeitfensters zu ermöglichen.

Mit anderen Worten berechnet das Prüfobjekt auf Basis seines aktuellen internen Zustands immer wieder seinen künftigen internen Zustand während eines künftigen Zeitfensters sowie eine von diesem künftigen internen Zustand abhängige und während des Zeitfensters vom Prüfobjekt zu verwendende Antwortfunktion. Diese berechnete Antwortfunktion wird ausgegeben um einem Prüfgerät eine Prüfung der Integrität des Prüfobjekts während des ausgegebenen künftigen Zeitfensters zu ermöglichen. Die Abstände und/oder die Zeitfenster selbst können von identischer oder unterschiedlicher Dauer sein. Vorzugsweise sind die Zeitfenster, die ausgegeben werden und während welcher legitime Anfragen erlaubt sind, von vergleichsweise kurzer Dauer. Beispielsweise machen die Zeitfenster weniger als 50% insb. weniger als 10% der Zeitspanne aus während welcher das Prüfobjekt verwendet wird.

Nach Ausführungsformen empfängt das Prüfobjekt eine illegitime Anfrage. Eine illegitime Anfrage ist jede Anfrage, die durch das Prüfobjekt zu einem Zeitpunkt empfangen wird, der außerhalb eines von dem Prüfobjekt ausgegebenen künftigen Zeitfensters liegt und Einfluss auf den internen Zustand des Prüfobjekts hat. In Reaktion auf die (und insbesondere als Folge der) illegitime Anfrage ändert sich der interne Zustands des Prüfobjekts, sodass das Prüfobjekt zum nächsten künftigen Zeitfenster, für welches eine künftige Antwortfunktion vorhergesagt und ausgegeben wurde, eine andere als diese vorhergesagte und ausgegebene Antwortfunktion verwendet.

Dies kann vorteilhaft sein, da hierdurch sichergestellt ist, dass ein illegitimer Zugriff auf das Prüfobjekt, z.B. um dieses außerhalb der "legitimen" Zeitfenster mit einer Challenge zu befragen und/oder um den aktuellen internen Zustand des Prüfobjekts zu bestimmen oder zu verändern, automatisch bei der nächsten legitimen Anfrage durch das Prüfgerät erkannt wird. Denn die durch die illegitime Anfrage bewirkte Änderung des internen Zustands des Prüfobjekts wird unweigerlich dazu führen, dass die während des ausgegebenen künftigen Zeitfensters für eine legitime Anfrage verwendete Antwortfunktion nicht mehr der entsprechen wird, die das Prüfobjekt vorab im Hinblick auf dieses Zeitfenster veröffentlicht hat. Die vom Prüfobjekt in Antwort auf die legitime Anfrage zurückgegebene Antwort wird also nicht der Antwort entsprechen, die angesichts der Challenge und der zuvor ausgegebenen Antwortfunktion vom Prüfgerät erwartet wurde. Dies ist ein Hinweis darauf, dass zwischen dem Zeitpunkt der letzten (erfolgreichen) Prüfung einer Antwort auf eine Challenge und dem Zeitpunkt der aktuellen Prüfung einer weiteren Antwort auf eine weitere Challenge ein Angriff auf das Prüfobjekt stattgefunden hat und das Prüfobjekt als kompromittiert anzusehen ist. Durch die illegitime Anfrage sind sowohl der interne Zustand als auch die künftig verwendeten Antwortfunktionen verändert worden und dadurch "außer Takt" geraten.

Nach Ausführungsformen empfängt das Prüfobjekt eine legitime Anfrage von dem Prüfgerät innerhalb eines Zeitfensters, für welches das Prüfobjekt eine legitime Antwortfunktion vorhergesagt und ausgegeben hat. Das legitime Zeitfenster folgt dem Zeitpunkt des Empfangs der illegitimen Anfrage zeitlich nach. Das Prüfobjekt verwendet die andere Antwortfunktion anstelle der ausgegebenen legitimen Antwortfunktion zum Erzeugen einer illegitimen Antwort auf die legitime Anfrage. Die andere Antwortfunktion ist eine Antwortfunktion, die von dem Prüfobjekt niemals oder zumindest nicht für diesen Zeitpunkt ausgegeben wurde. Das Prüfobjekt gibt die illegitime Antwort an das Prüfgerät zurück.

Unter einer "illegitimen Antwort" wird hier eine Antwort verstanden, die mit einer Antwortfunktion berechnet wurde, die anders ist als die Antwortfunktion, die von dem Prüfgerät vorab für das Zeitfenster, innerhalb dessen die Anfrage empfangen wurde, vorhergesagt und ausgegeben wurde.

Dies hat den Vorteil, dass die Prüfung der mit der illegitimen Antwortfunktion erzeugten Antwort ergeben wird, dass das Prüfobjekt einer illegitimen Anfrage ausgesetzt wurde und also möglicherweise manipuliert wurde und nicht mehr als vertrauenswürdig/integer anzusehen ist.

Nach Ausführungsformen umfasst das Prüfobjekt einen Datenspeicher, z.B. einen F. Das Verfahren umfasst:

- Speicherung von einem oder mehreren Attributen, die die digitale Identität einer Person oder eines physischen Objekts ausmachen, in dem Datenspeicher des Prüfobjekts; und
- Gewährung eines lesenden und/oder schreibenden Zugriff auf die Daten des Datenspeichers an das Prüfgerät durch das Prüfobjekt nur dann, wenn das Prüfgerät eine Anfrage innerhalb eines Zeitraums an das Prüfobjekt gesendet hat, für welchen das Prüfobjekt zuvor eine Antwortfunktion ausgegeben hat, die während dieses Zeitfensters auch tatsächlich zur Beantwortung der Anfrage verwendet wurde.

Gemäß mancher Ausführungsformen wird also eine digitale Identität mit der Integrität des Prüfobjekts verknüpft. Dies kann vorteilhaft sein, da das Prüfobjekt die digitale Identität einer Person oder eines anderen physischen Objekts repräsentiert und zum sicheren Nachweis der digitalen Identität dieser Person bzw. dieses physischen Objekts verwendet werden kann.

Der Datenspeicher kann insbesondere als nicht-flüchtige Speicher ausgebildet sein, z.B. als ROM (read only memory), PROM (programmable read only memory), EPROM (erasable programmable read only memory), EEPROM (electrically erasable programmable read only memory), Flash-EEPROM (z. B. USB-Speichersticks) oder als Datenspeicher eines anderen Typs.

Nach Ausführungsformen umfasst das Verfahren eine Durchführung der Prüfung durch das Prüfgerät.

Die Durchführung kann z.B. ein Berechnen eines Erwartungswertes für ein bestimmtes Zeitfenster durch das Prüfgerät umfassen. Die Berechnung erfolgt auf Basis der vom Prüfobjekt für dieses Zeitfenster ausgegebenen Antwortfunktion und auf Basis der vom Prüfgerät erzeugten und an das Prüfobjekt gesendeten Challenge. Die Prüfung umfasst sodann das Vergleichen der vom Prüfobjekt erhaltenen Antwort mit dem Erwartungswert. Bei Übereinstimmung gilt das Prüfobjekt als integer, das Prüfgerät geht also davon aus, dass der Zustand des Prüfobjekts nicht durch unberechtigte Dritte manipuliert wurde.

Gemäß Ausführungsformen wird das Prüfobjekt als Identitäts-Dokument einer Person (z.B. Personalausweis, Führerschein, Firmenausweis) verwendet und durch Nachweis der Integrität des Prüfobjekts implizit auch einen Nachweis der Identität der Person zu erbringen.

Nach Ausführungsformen deckt die Gesamtdauer der Zeitfenster, für welche das Prüfobjekt eine der Antwortfunktionen vorhersagt und ausgibt, weniger als 50%, vorzugweise weniger als 10% der Zeit ab, während welcher das Prüfobjekt verwendet wird.

Die Zeitfenster, für welche das Prüfobjekt jeweils gültige Antwortfunktionen vorhersagt kann je nach Implementierung unterschiedlich sein. Beispielsweise können die Zeitfenster eine Dauer von ca. 10 Millisekunden bis zu einer Sekunde haben. Der Abstand zwischen zwei Zeitfenstern kann z.B. im Bereich von 10 Millisekunden bis mehrere Sekunden liegen.

Nach manchen Ausführungsformen ist das Prüfobjekt dazu ausgebildet, nur für einen künftigen internen Zustand für ein künftiges Zeitfenster sowie eine zugehörige Antwortfunktion vorherzusagen und diese Antwortfunktion auszugeben. Dies macht insbesondere für Anwendungen Sinn, in welchen damit gerechnet werden muss, dass ohnehin in der Regel während eines ausgegebenen Zeitfensters eine Anfrage empfangen wird, da die Beantwortung dieser Anfrage ohnehin den internen Zustand es Prüfobjekts ändert und eine Vorhersage des internen Zustands/der Antwortfunktionen für weitere in der Zukunft liegende Zeitfenster keinen Sinn macht, da diese Vorhersagen durch die Änderung des internen Zustands nicht mehr zutreffen.

Nach anderen Ausführungsformen ist das Prüfobjekt dazu ausgebildet, für zwei oder mehr künftige Zeitfenster jeweils den gültigen internen Zustand sowie je eine zugehörige Antwortfunktion vorherzusagen und diese Antwortfunktionen und künftigen Zeitfenster auszugeben. Dies macht insbesondere für Anwendungen Sinn, in welchen damit gerechnet werden muss, dass in der Regel während mehrerer ausgegebener Zeitfenster keine Anfrage empfangen wird, sodass der interne Zustand des Prüfobjekts sich zwar noch ändern kann, aber dies in einer Weise geschieht, die auf Basis des internen Zustands zum Zeitpunkt der Berechnungen vorhergesagt werden kann. Solange also das Prüfobjekt keine Anfrage empfängt und bearbeitet sind auch Vorhersagen bezüglich der in mehreren künftigen Zeitfenstern verwendeten Antwortfunktion weiterhin gültig.

Dies kann vorteilhaft sein, da hierdurch nur innerhalb eines vergleichsweise kurzen Zeitraums legitime Anfragen an das Prüfobjekt gestellt werden können. Jegliche Anfrage außerhalb dieser Zeitfenster führt zu einer Änderung des internen Zustands und dazu, dass während des nächsten auf den Angriff folgenden legitimen Zeitfensters das Prüfobjekt als "kompromittiert" angesehen werden kann. In manchen Ausführungsformen führt ein illegitimer Angriff zur kompletten Sperrung der Anfrage-Antwort Funktionalität des Prüfobjekts. Dies kann vorteilhaft sein, da bei einem DOS oder DDOS Angriff verhindert wird, dass sämtliche Funktionen des Prüfgeräts aufgrund der hohen Rechenlast blockiert werden.

Quantenmechanische Implementierung

Nach Ausführungsformen beinhaltet das Prüfobjekt einen Quantencomputer. Der Quantencomputer beinhaltet ein Quantenregister mit mehreren Qubits. Der interne Zustand des Prüfobjekts ist durch den Zustand des Quantenregisters bestimmt oder mitbestimmt. Die Antwortfunktion ist ein Quantengatter. Das Quantengatter ist eine unitäre Operation, die auf den quantenmechanischen Zustand der Qubits des Quanten-Registers nach quantenmechanischen Prinzipien wirkt. Zu diesen quantenmechanischen Prinzipien gehört insbesondere das Superpositionsprinzip, d. h. die quantenmechanische Kohärenz, und die Quantenverschränkung.

Der Versuch, den internen Zustand oder die Antwortfunktion durch Zugriff auf das Prüfobjekt festzustellen, den Zustand des Quantenregisters dadurch verändert, dass eine Verschränkung der Qubits des Quantenregisters durch diesen Versuch beendet wird. Die vorhergesagte und ausgegebene ersten Antwortfunktion ist ein erstes Quantengatter aus einer Vielzahl unterschiedlicher von dem Prüfobjekt unterstützter Quantengatter, welches das Prüfobjekt innerhalb des ersten künftigen Zeitfensters als die ersten Antwortfunktion verwenden wird.

Gemäß Ausführungsformen der Erfindung ist der interne Zustand des Objekts also bestimmt durch eine Menge an miteinander verschränkten Qubits des Quantenregisters.

Die Verwendung von miteinander verschränkten Qubits bzw. einem Quantencomputer zur Repräsentation eines aktuellen und Vorhersage eines künftigen Zustands kann vorteilhaft sein, da quantenmechanische Eigenschaften der Qubits inhärent garantieren, dass ein auf Basis eines Quantencomputers implementiertes Prüfobjekt jegliche unberechtigte Anfrage bzw. jeglichen Manipulationsversuch zuverlässig anzeigt: Es gehört zu einer intrinsischen Eigenschaft von miteinander verschränkten Qubits, dass die Qubits des Quantenregisters zwar statistischen Gesetzen folgen, der tatsächliche Zustand der Qubits bzw. des Quantenregisters zu einem bestimmten Zeitpunkt erst durch eine Messung, also einen Eingriff in das quantenmechanische System des Quantenregisters, festgelegt wird. Das bedeutet, ein Quantencomputer hat intrinsisch die Eigenschaft, dass es unmöglich ist, von außen den aktuellen oder künftigen Zustand des Quantenregisters zu bestimmen, ohne durch die Messung eben diesen Zustand zu verändern. Dem Quantencomputer ist es aber möglich, auf der Basis eines aktuell festgelegten Zustands der Qubits im Register und unter Verwendung statistischer Gesetze den künftigen Zustand der verschränkten Qubits im Quantenregister vorherzusagen. Der Quantencomputer kann also bestimmen, welches von mehreren unterstützten Quantengattern während eines bestimmten künftigen Zeitraums verwendet werden soll, um auf Basis eines für dieses Zeitfenster vorhergesagten Zustands des Quantenregisters eine Anfrage zu beantworten. Da eine Menge aus verschränkten Qubits den internen Zustand des Prüfobjekts bestimmen oder mitbestimmen, hat das Prüfprojekt systemimmanent auch die Eigenschaft, dass jegliche Anfrage bezüglich des internen Zustands des Systems, die einer "Messung" des internen Zustands z.B. zur Bestimmung einer aktuellen Antwortfunktion gleichkommt, zu einem Beenden der Verschränkung der Qubits und damit zu einer Änderung des internen Zustands des Prüfobjekts führt.

Qubits sind hochempfindlich gegenüber Störquellen von außen. Bereits das einfache Auslesen eines Qubits kann seinen Quantenzustand zerstören, aber auch stärkere mechanische Belastungen des Prüfobjekts können den Quantenzustand von Qubits des Quantenregisters verändern. Jegliche "Messung" bzw. jegliche Beantwortung einer Anfrage führt also dazu, dass die Quantenverschränkung beendet wird und sich der interne Zustand des Quantenregisters dadurch so ändert, dass der für die Zukunft auf Basis des bisherigen Zustands vorhergesagte Zustand nicht mehr eintreten wird.

Beispielsweise kann der Quantencomputer dazu konfiguriert sein, nach dem Beantworten einer aktuellen Anfrage den internen Zustand des Quantenregisters dadurch neu festzulegen, das die einzelnen Qubits auf eine bestimmte Weise initialisiert werden, sodass diese einen initialen Wahrscheinlichkeitswehrt für die Ausprägung eines bestimmten binären Werts "1" bzw. "0" repräsentieren. Der Quantencomputer "kennt" also den aktuellen internen Zustand des Registers zumindest im Rahmen statistischer Gesetze und kann auf dieser Basis vorhersagen, wie das Quantenregister reagieren wird, wenn es mit einer bestimmten Challenge einer Anfrage konfrontiert wird.

a) Spin-Qubits

Nach Ausführungsformen sind die Qubits durch Spins von Elektronen repräsentiert. Der Empfang der Anfrage mit der Challenge ist oder beinhaltet eine Beeinflussung des Spins von ein oder mehreren Elektronen durch zumindest ein (von einem externen Gerät, z.B. Prüfgerät erzeugtes) Magnetfeld. Die Challenge ist die Richtung und/oder Amplitude des zumindest einen Magnetfelds.

Beispielsweise kann die von dem Prüfobjekt ausgegebene erste Antwortfunktion spezifizieren, dass das Prüfobjekt eine Anfrage in Form eines Magnetfeldes, welches während des ersten Zeitfensters auf die Qubits des Registers gerichtet wird um die Spins von einem oder mehreren der Elektronen des Quantenregisters in einem bestimmten Winkel auszurichtet, derart beantworten wird, dass das Prüfobjekt ein Rechenergebnis zurückgibt, welches dem Vierfachen der Stärke des Magnetfelds des entspricht. Eine von dem Prüfobjekt ausgegebene zweite Antwortfunktion könnte spezifizieren, dass das Prüfobjekt eine Anfrage in Form eines Magnetfelds, welches während des zweiten Zeitfensters auf die Qubits des Registers gerichtet wird um diese auszurichten, derart beantworten wird, dass das Prüfobjekt ein Rechenergebnis zurückgibt, welches einem Drittel der Stärke des Magnetfeldes entspricht. Eine von dem Prüfobjekt ausgegebene dritte Antwortfunktion könnte spezifizieren, dass das Prüfobjekt eine Anfrage in Form eines Magnetfelds, welches während eines dritte Zeitfensters auf die Qubits des Registers gerichtet wird um diese anzuregen, derart beantworten wird, dass das Prüfobjekt ein Rechenergebnis zurückgibt, welches dem Doppelten des Winkels des Magnetfelds relativ zu einer Referenzrichtung entspricht. Die von dem Prüfgerät für jede Anfrage neu gewählte bzw. erzeugte Challenge würde hier also in der Wahl einer bestimmten, anfrage-individuellen Stärke und/oder Ausrichtung (Winkel) des zumindest einen Magnetfelds entsprechen.

Diese Form der Quantenbits wird auch als sog. "Spin-Qubits" bezeichnet. Spin-Qubits können Daten per Mikrowelle austauschen. Der Spin von in Silizium-Fehlstellen eingebetteten Elektronen kann als Grundeinheiten für Quantencomputer verwendet werden. Die Spin-Qubits können mit dem elektromagnetischen Feld von Mikrowellen gekoppelt (miteinander verschränkt) und auch "ausgelesen" werden. Dies hat den Vorteil, dass das Prüfgerät z.B. einen Photonenstrahl (Laser) verwenden kann, um Quanteninformationen schonend aus dem Quantenregister auszulesen.

Beispielsweise kann ein Quantenregister mit Spin-Qubits dadurch erzeugt werden, dass mehrere einzelne Elektronen gezielt in winzige Doppelkammern innerhalb eines Siliziumwafers einschlossen werden. Der Spin dieser Elektronen dient dabei als Speichermedium für Information. Durch Anlegen eines Magnetfelds oder von Mikrowellenfeldern an die Elektronen im Quantenregister des Prüfobjekts, was z.B. durch das Prüfgerät durchgeführt werden kann, kann die Quanteninformationen des Elektronenspins initial festgelegt werden.

Die Implementierung des Quantencomputers auf der Basis von Spin-Qubits ist jedoch nur eine mögliche Ausführungsform. Quanten-Prozessoren von Google oder IBM basieren auf supraleitenden Schleifen, sogenannten SQUIDs. Gegenüber den supraleitenden Qubit-Varianten haben Prüfobjekte auf der Basis von Spin-Qubits jedoch den Vorteil, dass sie platzsparender und damit kleiner zu verbauen sind. Ein zweiter Vorteil von Spin-Qubits ist, dass diese nach heutigem Wissen bei etwa 1 Kelvin (-272,15 °C) eingesetzt werden können, wohingegen supraleitende Qubits Temperaturen von 20 mK (-273,13 °C) erfordern. Dieser Unterschied erlaubt eine weit weniger komplexe Bauweise des Quantencomputers. Ein weiterer Vorteil ist, dass die Produktion von Quantencomputern mit Spin-Qubits auf der heute schon weit entwickelten Waver-Technologie aufbaut sodass sich auch im Hinblick auf die Produktionskosten Vorteile ergeben.

b) Ionen-Qubits

Nach anderen Ausführungsformen sind die Qubits durch Anregungszustände von Atomen repräsentiert. Der Empfang der Anfrage mit der Challenge ist oder beinhaltet eine Beeinflussung des Anregungszustandes von ein oder mehreren Elektronen durch zumindest einen (von einem externen Gerät, z.B. Prüfgerät erzeugten) Laserpuls. Die Challenge ist die Dauer und/oder Wellenlänge von ein oder mehreren zum Auslesen des Quantenregisters verwendeten Laserpulsen.

Beispielsweise kann die von dem Prüfobjekt ausgegebene erste Antwortfunktion spezifizieren, dass das Prüfobjekt eine Anfrage in Form eines Laserpulses, welcher während des ersten Zeitfensters auf die Qubits des Registers gerichtet wird um diese anzuregen, derart beantworten wird, dass das Prüfobjekt ein Rechenergebnis zurückgibt, welches dem Fünffachen der Dauer des Laserpulses entspricht. Eine von dem Prüfobjekt ausgegebene zweite Antwortfunktion könnte spezifizieren, dass das Prüfobjekt eine Anfrage in Form eines Laserpulses, welcher während des zweiten Zeitfensters auf die Qubits des Registers gerichtet wird um diese anzuregen, derart beantworten wird, dass das Prüfobjekt ein Rechenergebnis zurückgibt, welches dem Achtfachen der Amplitude des Laserpulses entspricht. Eine von dem Prüfobjekt ausgegebene dritte Antwortfunktion könnte spezifizieren, dass das Prüfobjekt eine Anfrage in Form eines Laserpulses, welcher während eines dritte Zeitfensters auf die Qubits des Registers gerichtet wird um diese anzuregen, derart beantworten wird, dass das Prüfobjekt ein Rechenergebnis zurückgibt, welches dem Dreifachen der Amplitude des Laserpulses entspricht. Die von dem Prüfgerät für jede Anfrage neu gewählte bzw. erzeugte Challenge würde hier also in einem Laserpuls einer bestimmten, anfrage-individuellen Pulsdauer und/oder einer bestimmten, anfrage-individuellen Laserpulsamplitude entsprechen.

Da Qubits in einem Quantenregister in der Regel verschränkt werden, ist es gemäß Ausführungsformen der Erfindung ausreichend, die Anfrage in Form eines einzigen Laserpuls für das gesamte Register zu erzeugen.

Beispielsweise können die angeregten Atome einfach positiv geladenen Ionen sein, also Atome, denen ein Elektron fehlt. Diese können durch elektrische Felder in sogenannten Paul-Fallen gefangen gehalten werden. Ein nicht angeregtes Ion entspricht dem Zustand Null und ein angeregtes Atom dem Zustand Eins. Als nicht angeregt bezeichnet man ein Atom mit der niedrigst möglichen Energie. Angeregt bedeutet, dass dem Teilchen Energie zugeführt wurde und das äußerste Elektron dadurch in ein höheres Energieniveau gelangt ist.

Mit Lasern können in einem ersten Schritt die Ionen des Quantenregisters in einen Superpositionszustand zwischen "angeregt" und "nicht angeregt" versetzt werden. Dies ist ein aktiver Schritt, der z.B. im Zuge der Initialisierung des Prüfobjekts und/oder der Initialisierung des Quantenregisters durchgeführt werden kann. In analoger Weise können bei einer auf Spin-Qubits basierten Implementierung die Spins der Elektronen des Quantenregisters durch entsprechende Magnetfelder so ausgerichtet werden, dass die ausgerichteten Spins der Elektronen in einen Superpositionszustand zwischen einer "ersten Ausrichtung" und einer "zweiten Ausrichtung" versetzt werden.

Die Initialisierung verläuft so, dass die Zustände der Qubits des Quantenregisters miteinander verschränkt sind. Nach diesem Schritt können die miteinander verschränkten Qubits des Quantenregisters zum Lösen von Rechenaufgaben, z.B. zur Beantwortung einer Anfrage mit einer Challenge, verwendet werden. Während die Qubits des Registers Berechnungen durchführen, also z.B. eine Challenge mit einer bestimmten Antwortfunktion verarbeiten um eine Anfrage zu beantworten, muss die Dekohärenz, also das Zurückfallen in einen klassischen Zustand, verhindert werden. Die Operatoren, die von Quantencomputern für elementare Rechenoperationen verwendet werden, heißen bei Quantencomputern Quantengatter. Auf Qubits angewendet verändern sie die dort gespeicherte Information. Bei den Ionenfallen beschreiben Quantengatter z.B. die Art, mit der ein Ion durch einen Laser manipuliert wird - also Dauer der Bestrahlung und/oder Wellenlänge des Lichts.

Ein Rechenvorgang eines Quantencomputers, z.B. die Berechnung einer Antwort auf eine Challenge, besteht aus einer Abfolge mehrerer Grundoperationen. Zunächst wird der Anfangszustand des Quantenregisters festgelegt. Dies geschieht gemäß Ausführungsformen der Erfindung einmalig im Zuge der Initialisierung des Prüfobjekts. In manchen Ausführungsformen wird der Anfangszustand des Quantenregisters nach der Beantwortung jeder Anfrage jeweils neu gesetzt. Im Falle der Ionen-Qubits kann das initiale "Setzen" der Qubits auf einen definierten Anfangszustand z.B. dadurch realisiert werden, dass Laserpulse jeweils einzeln auf die in dem Quantenregister enthaltenen Atome schießen um diese anzuregen und ggf. auch zu ionisieren. Durch die Länge der Bestrahlung wird die Wahrscheinlichkeit festgelegt, mit der das Atom bzw. Ion anschließend im angeregten oder nicht angeregten Zustand gemessen werden kann. Diese Wahrscheinlichkeiten sind durch Wellenfunktionen, die den einzelnen Qubits zugeordnet sind, beschreibbar. Wie lange ein Ion bestrahlt werden muss, um einen gewünschten Zustand zu erlangen, ergibt sich aus der notwendigen Bestrahlungsdauer, um ein nicht-angeregtes Atom in ein angeregtes Atom zu überführen. Diese Überführung entspricht der Negations-Operation "NOT". Die Negations-Operation "NOT" korrespondiert also zu dem Umklappen eines Qubits von Null auf Eins. Wenn das Ion nun nur die Hälfte der Zeit bestrahlt wird, die für das komplette Umklappen erforderlich ist, befindet es sich anschließend genau in einem quantenmechanischen Zwischenzustand (Superpositionszustand), in dem es sich mit einer Wahrscheinlichkeit von 50 Prozent noch im Grundzustand und mit einer Wahrscheinlichkeit von 50 Prozent schon im angeregten Zustand befindet.

Die Qubits des Quantenregisters sind miteinander verschränkt. Das bedeutet, wenn ein Qubit des Registers z.B. im Zuge des Empfangs einer Anfrage in Form eines Laserpulses mit dem Laserpuls manipuliert wird (oder im Falle der Spin-Qubits mit einem Magnetfeld), ändert sich instantan - also ohne Zeitverlust - der Zustand des ganzen Registers. Deshalb führt jede Anfrage inhärent zu einer Änderung des internen Zustands des Prüfobjekts. Durch anschließende aktive "Neu-Initialisierung" eines bestimmten internen Zustands des Quantenregisters ist es dem Quantencomputer des Prüfobjekts jedoch möglich, einen künftigen Zustand und eine dazu korrespondierende Antwortfunktion vorherzusagen und auszugeben.

Nach Ausführungsformen beträgt die Lebensdauer für einen angeregten Zustand eines Ionen-Qubits ca. eine Sekunde. Ein Superpositionszustand hat eine Lebenserwartung von etwa einer zehntel Sekunde. In diesem Zeitfenster kann der Quantencomputer rechnen, also mit einem oder mehreren Quantengattern Berechnungen ausführen, die z.B. als Input Informationen verwenden können, die in der Dauer oder Amplitude des Laserpulses codiert sein können.

Implementierung mit Analogcomputer

Nach Ausführungsformen beinhaltet das Prüfobjekt einen Analogcomputer. Der Analogcomputer ist dazu ausgebildet, Berechnungen mit Hilfe von mehreren kontinuierlichen mechanischen oder elektrischen Vorgängen durchzuführen, wobei die Vorgänge Schwingungen harmonischer Oszillatoren sind.

Der Analogcomputer beinhaltet ein Analogregister, welches eine Überlagerung der Schwingungen enthält. Das Analogregister kann z.B. die aktuelle Überlagerung messen und zur Vorhersage des Überlagerungszustands zu einem künftigen Zeitpunkt verwenden.

Der interne Zustand des Prüfobjekts ist durch den Zustand des Analogregisters bestimmt oder mitbestimmt. Die ausgegebene Antwortfunktion beinhaltet eine Spezifikation eines Überlagerungsmusters, welches durch eine spezifische Auswahl und/oder Eigenschaften der Oszillatoren deren Schwingungen während eines künftigen Zeitfensters überlagert werden sollen, erhalten wird.

Die Verwendung von Prüfobjekten mit einem Analogcomputer kann vorteilhaft sein, da auf ähnliche Weise wie bei einem Quantencomputer eine starke Verschränkung physischer Eigenschaften des Prüfobjekts mit der Art und Weise, wie eine Anfrage beantwortet wird, erreicht wird. Diese Verschränkung bietet in hohes Maß an Manipulationssicherheit: Da die Anfrage bzw. die Challenge mit dem Analogregister bzw. dem Quantenregister in physische Wechselwirkung tritt, z.B. die Anfrage die Qubits anregt bzw. die Anfrage aus Schwingungen eines Prüfobjekt-externen Oszillatoren besteht, die sich mit den Schwingungen der Oszillatoren des Prüfobjekts überlagern, wird sichergestellt, dass jede unberechtigte Anfrage bzw. jeder stärkere physische Eingriff in das Prüfobjekt dazu führt, dass der im Register repräsentierte Überlagerungszustand beeinflusst und damit der interne Zustand des Prüfobjekts verändert wird.

Nach Ausführungsformen ist das Überlagerungsmuster ein durch Superposition der Schwingungen der Oszillatoren erhaltenes Muster. Unter Superposition wird hier die Überlagerung (Interferenz) mehrerer Wellen (Schwingungen) des gleichen Typs (Schallwelle, Lichtwelle, etc.) verstanden. Die relevante Größe der Überlagerung ist die Amplitude (die "Höhe") der einzelnen Wellen. So können sich beispielsweise mehrere elektromagnetische Wellen gegenseitig überlagern, wodurch sich ihre Amplituden zur gleichen Zeit an manchen Punkten gegenseitig verstärken und an anderen gegenseitig abschwächen.

Nach Ausführungsformen ist das Überlagerungsmuster ein Überlagerungsmuster mehrerer harmonischer Schwingungen verschiedener Frequenz, insbesondere eine Überlagerung mehrerer rechtwinkelig zueinander stehender harmonischer Schwingungen, insbesondere eine Lissajous-Figur (benannt nach dem französischen Physiker Jules Antoine Lissajous 1822-1880).

Nach Ausführungsformen sind die Schwingungen ausgewählt aus einer Gruppe umfassend:

- Elektrische Schwingungen innerhalb von aneinander gekoppelten Schaltkreisen;
- Lichtwellen, die von Lasern ausgesendet werden;
- Schallwellen, die von Schallquellen ausgesendet werden.

Nach Ausführungsformen umfasst das Verfahren ferner:

- Initialisierung des Prüfobjekts, wobei im Zuge der Initialisierung Start und/oder Dauer der künftigen Zeitfenster spezifiziert wird; und
- In Antwort auf den Erhalt einer Antwort außerhalb der ausgegebenen künftigen Zeitfenster durch das Prüfobjekt, irreversible oder reversible Selbst-Sperrung durch das Prüfobjekt, sodass weitere Anfragen nicht oder mit einer Fehlermeldung beantwortet werden.

Dies kann vorteilhaft sein, weil besonders hohes Maß an Sicherheit erreicht wird. Hier hat das Prüfobjekt keine Möglichkeit, um nach dem Erhalt und der Beantwortung einer legitimen oder illegitimen Anfrage seinen eigenen internen Zustand auf einen neuen, definierten Ausgangszustand zu setzen, der es erlaubt, künftige Zustände und/oder künftige Antwortfunktionen vorherzusagen. Ein definierter Ausgangszustand kann nur im Zuge eines Initialisierungsprozesses des Prüfobjekts realisiert werden und alle vorhergesagten künftigen Antwortfunktionen leiten sich von diesem initialen, definierten Ausgangszustand ab. Wird dieser Zustand einmalig gestört, zum Beispiel durch eine illegitime Anfrage, sorgt die Selbstsperrung automatisch dafür, dass das Prüfobjekt bleibend außer Takt gerät und sämtliche weitere Anfragen, auch wenn diese innerhalb von legitimen Zeitfenstern erhalten werden, mit anderen als den veröffentlichten Antwortfunktionen beantwortet. Es ist also eine Neuinitialisierung des Prüfobjekts erforderlich (reversible Selbst-Sperrung) oder der komplette Austausch des Prüfobjekts (irreversible Selbst-Sperrung).

## Implementierung mit klassischem Digitalcomputer

Nach Ausführungsformen beinhaltet das Prüfobjekt einen klassischen Computer. Als "klassischer Computer" wird hier ein Rechner verstanden, welcher mittels programmierbarer Rechenvorschriften Daten verarbeitet, wobei die Datenverarbeitung nicht mit quantenmechanischen Gesetzen sondern mit den Gesetzen der klassischen Physik und Informatik beschreibbar ist. Auf dem klassischen Computer wird eine Software mit einer Objektfunktion ausgeführt. Die Objektfunktion ist eine Funktion mit einer Reihe von Eigenschaften:
Die Objektfunktion repräsentiert den internen Zustand des Prüfobjekts. Die Objektfunktion ist dazu ausgebildet, während verschiedener Zeitfenster verschiedene Antwortfunktionen zu verwenden, um eine während des jeweiligen Zeitfensters empfangene Anfrage zu beantworten.

Die Objektfunktion ist dazu ausgebildet, zumindest die während des nächsten künftigen Zeitfensters zu verwendenden Antwortfunktion vorherzusagen und/oder auszugeben.

Die Objektfunktion ist dazu ausgebildet, in Antwort auf den Empfang einer illegitimen Anfrage außerhalb eines von dem Prüfobjekt ausgegebenen künftigen Zeitfensters, den Zustand der Objektfunktion so zu verändern, dass die während des nächsten künftigen Zeitfensters verwendete Antwortfunktion von der für dieses Zeitfenster ausgegebenen Antwortfunktion abweicht.

Die Antwortfunktion in dieser Ausführungsvariante ist eine Softwarefunktion, die die Challenge als Eingabe verwendet um die Antwort spezifisch für die Anfrage mit dieser Challenge zu berechnen.

Die Verwendung eines klassischen Computers, der auch als Mikroprozessor einer Chipkarte ausgebildet sein kann, kann vorteilhaft sein, da entsprechende Bauteile leicht und günstig verfügbar sind. Sie nehmen wenig Raum ein und eignen sich daher in besonderem Maße für mobile Anwendungen, z.B. für Prüfobjekte, die als Wert- oder Sicherheitsausweis dienen. Da eine Software verwendet wird um den internen Zustands des Prüfobjekts zu repräsentieren, ist die Verschränkung des durch die Objektfunktion repräsentierten internen Zustands mit dem physischen Zustand des Prüfobjekts weniger eng als bei den Ausführungsformen mit dem Quantencomputer oder Analogcomputer. Dafür zeichnet sich die softwarebasierte Ausführungsform dadurch aus, dass sie besonders schnell auf einer Vielzahl unterschiedlicher Geräte installierbar ist, flexibel an verschiedene Anwendungsszenarien angepasst werden kann und keinen größeren apparativen Aufwand erfordert, der etwa nötig ist um den verschränkten Zustand von Qubits in einem Quantenregister aufrecht zu erhalten oder um die Schwingungen mehrerer Oszillatoren auf definierte Weise zu überlagern.

Nach Ausführungsformen ist das Prüfobjekt dazu ausgebildet, in Antwort auf den Empfang einer Anfrage außerhalb von ausgegebenen künftigen Zeitfenstern, die bereits für das nächste künftige Zeitfenster ausgegebene Antwortfunktion nicht mehr zu verwenden und stattdessen eine andere Antwortfunktion zur Beantwortung einer während des nächsten künftigen Zeitfensters erhaltenen Anfrage zu verwenden.

Beispielsweise kann die Antwortfunktion eine polynomische Gleichung sein, welche ein oder mehrere Parameterwerte als Argument erfordern. Diese Parameterwerte können mit der Challenge übergeben werden.

Beispielsweise kann die Objektfunktion zu einem Zeitpunkt t0 eine erste Antwortfunktion AF1 für ein erstes künftiges Zeitfenster wie folgt vorhersagen:
Zunächst erzeugt die Objektfunktion einen aktuellen Zufallswert ZW(t1), z.B. ZW(t1)="34". Dieser repräsentiert den internen Zustand der Objektfunktion und damit des Prüfobjekts zum Zeitpunkt t0 (jetzt) und auch noch während des künftigen ersten Zeitfensters, der geheim ist und nicht von Prüfobjekt-externen Geräte in Erfahrung gebracht werden kann. Der Einfachheit halber wird der an t0 erzeugte Zufallswert als ZW(t1) bezeichnet, da er auch noch im Zeitfenster t1 gültig ist.

Die Objektfunkton verwendet eine Rumpffunktion, um für verschiedene künftige Zeitfenster die jeweils von dem Prüfobjekt verwendete Antwortfunktion zu erzeugen (was dem Vorhersagen im Falle der Quantencomputer und Analogcomputer entspricht) und auszugeben.

Die Rumpfunktion könnte beispielsweise lauten wie folgt:

$$AF_{rumpf}(t) = ZW(t1) + 3 + (C(t))*2.$$

Hierbei spezifiziert A die Antwort, die von der während des Zeitfensters t gültigen Antwortfunktion berechnet wird, ZW(t-1) ist der Zufallswert, der schon vorab von der Objektfunktion erzeugt und zur Berechnung und Ausgabe der Antwortfunktion verwendet wurde, C(t) ist die Challenge, die in der während des Zeitfensters t empfangenen Anfrage spezifiziert ist.

Die für das Zeitfenster t1 zum Zeitpunkt t0 unter Verwendung des aktuellen Zufallswerts ZW(t1)="34" vorhergesagte bzw. erzeugte und vom Prüfobjekt ausgegebene erste Antwortfunktion A(t1) lautet also:

$$AF1(t1) = 34 + 3 + (C(t1))*2,$$

also kurz:

$$AF1(t1) = 37 + (C(t1))*2.$$

Die erste Antwortfunktion AF1 (t1)= 37 +(C(t))*2 wird vom Prüfobjekt an das Prüfgerät ausgegeben, vorzugweise zusammen mit einer Spezifikation des ersten Zeitfensters, sodass das Prüfgerät weiß, wann es legitimerweise eine Anfrage an das Prüfobjekt senden kann.

Während des Zeitfensters t1 sendet das Prüfgerät nun also tatsächlich eine Anfrage mit einer Challenge des Wertes "5" an das Prüfobjekt.

Das Prüfobjekt verwendet die erste Antwortfunktion AF1, um die Antwort A1 wie folgt zu berechnen:

$$A1 = AF1(t1) = 37 + 5*2 = 47.$$

Das Prüfobjekt gibt den Wert 47 als Antwort zurück. Da das Prüfgerät sowohl die Antwortfunktion AF1 als auch die aktuell verwendete Challenge "5" kennt, kann es überprüfen, ob der in der Antwort spezifizierte Wert "47" identisch ist zu dem Wert, den das Prüfgerät selbst mittels der AF1 und der Challenge von "5" berechnet.

Nach dem Senden der Antwort ändert das Prüfobjekt seinen internen Zustand. Beispielsweise erzeugt es einen neue Zufallswert ZW(t2), z.B. ZW(t2)="13". Dieser repräsentiert den internen Zustand der Objektfunktion und damit des Prüfobjekts zum Zeitpunkt nach Beantwortung der ersten Anfrage (jetzt) und auch noch während des künftigen zweiten Zeitfensters.

Die Objektfunkton verwendet die Rumpffunktion, um für das künftige Zeitfenster t2 eine zweite Antwortfunktion AF2 zu erzeugen und auszugeben.

$$AF2(t2) = 13 + 3 + (C(t2))*2,$$

also kurz:

$$AF2(t2) = 16 + (C(t2))*2.$$

Die zweite Antwortfunktion AF2(t2)= 16 +(C(t2))*2 wird vom Prüfobjekt an das Prüfgerät ausgegeben, vorzugweise zusammen mit einer Spezifikation des zweiten Zeitfensters, sodass das Prüfgerät weiß, wann es legitimerweise eine Anfrage an das Prüfobjekt senden kann.

Während des Zeitfensters t2 sendet das Prüfgerät nun also tatsächlich eine Anfrage mit einer Challenge des Wertes "7" an das Prüfobjekt.

Das Prüfobjekt verwendet die erste Antwortfunktion AF2, um die Antwort A2 wie folgt zu berechnen:

$$A2 = AF2(t2) = 16 + 7*2 = 30.$$

Die hier dargestellte Objektfunktion ist vergleichsweise einfach, arbeitet aber in funktionaler Hinsicht ähnlich wie die auf dem Quantencomputer bzw. Analogcomputer basierenden Ausführungsformen. Eine Vielzahl anderer Rumpfunktionen ist möglich. Es können mehrere Zufallszahlen verwendet werden und auch die aktuelle Zeit, z.B. die Zeit des Erhalts einer Anfrage oder die Zeit an welchem die Objektfunktion den internen Zustand ändert kann in die Berechnung der Antwortfunktionen eingehen. Wichtig ist, dass die Objektfunktion gemäß bevorzugter Ausführungsformen dazu konfiguriert ist, in Antwort auf den Empfang einer Anfrage außerhalb eines ausgegebenen Zeitfensters (illegitime Anfrage) den aktuell gültigen Prüfobjektinternen Zustand, in diesem Beispiel repräsentiert durch den zuletzt berechneten Zufallswert ZW, und die auf diesem basierende Antwortfunktion, also die zuletzt berechnete und ausgegebene Antwortfunktion, zu ändern. Dies bewirkt, dass Anfragen, die das Prüfobjekt nach der illegitimen Anfrage empfängt, mit einer anderen als der veröffentlichten Antwortfunktion beantwortet werden und somit dem Prüfgerät anzeigen, dass ein Angriff und möglicherweise auch eine Manipulation stattgefunden hat.

Nach Ausführungsformen ist die Objektfunktion dazu ausgebildet, zumindest die während des nächsten künftigen Zeitfensters zu verwendenden Antwortfunktion zu erzeugen und die erzeugte Antwortfunktion auszugeben. In die erzeugte Antwortfunktion geht ein Zufallswert und/oder ein Zeitpunkt innerhalb des nächsten künftigen Zeitfensters eingeht.

Falls ein Zeitpunkt anstatt des Zufallswerts in die Erzeugung der künftigen Antwortfunktion eingeht, so geht der Zeitpunkt vorzugsweise in nichtlinearer Weise in die erzeugte und ausgegebene Antwortfunktion ein. Dies hat den Vorteil, dass die künftige Antwortfunktion nicht durch Analyse der bisher schon erzeugten und ausgegebenen Antwortfunktionen und deren zugehörige Zeitpunkte durch externe Dritte vorhergesagt werden können.

In einem weiteren Aspekt betrifft die Erfindung ein Prüfobjekt umfassend:

- eine Schnittstelle zum Empfang einer Anfrage mit einer Challenge von einem Prüfgerät;
- einen Informationsspeicher, insbesondere ein Quantenregister, ein Analogregister oder eine Software (z.B. Software mit Objektfunktion), wobei der Informationsspeicher einen internen Zustand des Prüfobjekts repräsentiert, wobei der Informationsspeicher dazu ausgebildet ist, eine Antwortfunktion zu verwenden, um eine Antwort auf die Anfrage zu erzeugen, wobei die Antwortfunktion vom internen Zustand des Prüfobjekts zum Zeitpunkt des Erhalts der Anfrage abhängt, wobei der interne Zustand und die von diesem abhängige Antwortfunktion durch Prüfobjekt-externe Objekte nicht vorhergesagt werden können, wobei ein Versuch, den internen Zustand oder die von dem Prüfobjekt verwendete Antwortfunktion durch Zugriff auf das Prüfobjekt festzustellen, den aktuellen internen Zustand und damit auch die von diesem abhängige Antwortfunktion verändert, wobei das Prüfobjekt ausgebildet ist zum:

  ◦ Vorhersagen eines ersten internen Zustands des Prüfobjekts innerhalb eines ersten künftigen Zeitfensters und Vorhersage einer ersten Antwortfunktion, die das Prüfobjekt zur Beantwortung einer innerhalb des ersten künftigen Zeitfensters empfangenen ersten Anfrage in Abhängigkeit von seinem vorhergesagten ersten internen Zustand verwenden wird;
  ◦ Ausgabe der vorhergesagte ersten Antwortfunktion über die Schnittstelle an das Prüfgerät, um dem Prüfgerät eine Prüfung der Integrität des Prüfobjekts innerhalb des ersten künftigen Zeitfensters unter Verwendung der ausgegebenen, vorhergesagten ersten Antwortfunktion zu ermöglichen.

Beispielsweise kann das Prüfobjekt ausgewählt sein aus einer Gruppe umfassend:

- ein Wertdokument;
- ein Sicherheitsdokument, insbesondere ein Identitätsdokument;
- ein Tresor;
- eine Zugriffskontrolleinheit für eine zugriffsbeschränkte Hardware- oder Softwarefunktion, insbesondere für Hardware- oder Softwarefunktionen, die die Verarbeitung, den Transport oder die Verwendung gefährlicher oder geheimer physischer Objekte oder Daten betreffen;
- eine Zutrittskontrolleinheit für eine zutrittsbeschränkte Gebiete, Gebäude oder Gebäudeteile, insbesondere für Gebiete, Gebäude oder Gebäudeteile, in welchen gefährliche oder geheime physische Objekte oder Daten aufbewahrt, verarbeitet oder verwendet werden;
- ein HSM (Hardware-Sicherheitsmodul);
- ein Schutzmodul gegen DOS Angriffe (Denial of Service Angriffe) und insbesondere DDOS Angriffe (distributed denial of service Angriffe), insbesondere ein Schutzmodul für Computer, Computernetzwerke und/oder Chipkarten.

Die hier im Hinblick auf das Verfahren beschriebenen Schritte sind so zu verstehen, dass sie implizit auch die Fähigkeit der jeweiligen diese Schritte ausführenden Komponenten offenbaren, diese Schritte durchzuführen, also insbesondere des Prüfobjekts und/oder des Prüfgeräts.

Unter einem "Prüfobjekt" wird hier ein physisches Objekt verstanden. Gemäß Ausführungsformen der Erfindung handelt es sich um ein Objekt, das dazu bestimmt ist, es Dritten auf möglichst einfache und verlässliche Weise zu prüfen, ob das Prüfobjekt manipuliert wurde und/oder ob zwischenzeitlich ein Angreifer versucht hat, den internen Zustand des Prüfobjekts zu erfahren.

Unter einer "Challenge" wird hier ein Datenwert (oder eine Kombination mehrerer Datenwerte) bezeichnet, der vom Prüfgerät für jede Anfrage an das Prüfobjekt neu erzeugt wird und dazu bestimmt ist, im Zuge der Anfrage an das Prüfobjekt übermittelt zu werden, sodass das Prüfobjekt diesen Datenwert als Input einer Antwortfunktion verwenden kann um die Anfrage zu beantworten. Die Übermittlung der Challenge und/oder der Anfrage kann je nach Ausführungsform unterschiedlich implementiert sein. Falls es sich bei dem Prüfobjekt um einen klassischen Computer mit einer Objektfunktion handelt (bzw. das Prüfobjekt einen solchen beinhaltet), kann die Anfrage eine elektronische Anfrage sein, z.B. eine Nachricht in Form einer XML oder JSON Datei, in welcher die Challenge enthalten ist. Falls es sich bei dem Prüfobjekt um einen Analogcomputer mit mehreren Oszillatoren handelt (bzw. das Prüfobjekt einen solchen beinhaltet), kann die Anfrage in einer Schwingung bestehen, die zum gleichen Schwingungstyp gehören wie die Schwingungen, die von den Oszillatoren erzeugt werden, sodass sich aus einer Überlagerung der Anfrage-Schwingung mit den bestehenden Schwingungen im Analogregister des Prüfobjekts eine neues, durch Superposition der Einzelschwingungen erzeugtes Schwingungsmuster ergibt. In diesem Fall kann die Challenge als Amplitude und/oder Frequenz oder sonstige Eigenschaft der Anfrage-Schwingung codiert und übermittelt werden. Falls es sich bei dem Prüfobjekt um einen Quantencomputer mit Qubits eines bestimmten Typs handelt (bzw. das Prüfobjekt einen solchen beinhaltet), kann die Anfrage in einer Schwingung bestehen, z.B. einem Laserstrahl oder einem Magnetfeld, das dazu ausgebildet ist, den Zustand des Qantenregisters zu messen, wodurch einerseits die Verschränkung der Qubits im Register beendet wird, andererseits ein Messergebnis ausgelesen wird, das als Antwort an das Prüfgerät zurückgegeben werden kann. In diesem Fall kann die Challenge als Amplitude und/oder Frequenz oder sonstige Eigenschaft des Messignals codiert und übermittelt werden, die geeignet ist, den Zustand des Registers während eines bestimmten Zeitfensters zu messen.

Unter einer "Antwortfunktion" wird hier eine auf verschiedene Weise realisierbare Funktion verstanden, welche eine Anfrage mit einer Challenge in eine Antwort umwandelt, wobei der aktuelle interne Zustand des Prüfobjekts in die Umwandlung eingeht. Falls es sich bei dem Prüfobjekt um einen klassischen Computer mit einer Objektfunktion handelt (bzw. das Prüfobjekt einen solchen beinhaltet), kann die Antwort eine in Software implementierte Transformationsoperation sein, die z.B. neben der Challenge einen oder mehrere Datenwerte (z.B. Zufallswerte), die den internen Zustand der Objektfunktion und des Prüfobjekts repräsentieren, als weiteren Input verwendet. Falls es sich bei dem Prüfobjekt um einen Analogcomputer handelt (bzw. das Prüfobjekt einen solchen beinhaltet) kann die Antwortfunktion in einem aktuellen Überlagerungszustand der Schwingungen mehrerer Oszillatoren bestehen, die bei Überlagerung mit einer Anfrage-Schwingung ein bestimmtes Gesamt-Überlagerungsmuster ausbilden, welches als Antwort fungiert. Falls es sich bei dem Prüfobjekt um einen Quantencomputer handelt (bzw. das Prüfobjekt einen solchen beinhaltet) kann die Antwortfunktion in einem aktuellen verschränkten Zustand der Qubits eines Quantenregisters bestehen, der bei Interaktion mit bzw. Messung durch ein Anfrage-Signal den verschränkten Zustand beendet und ein Messergebnis liefert, das als Antwort zurückgegeben wird. Die Antwortfunktion kann also je nach Implementierungsvariante explizit (zumindest in Form einer Rumpffunktion) von einem Programmierer definiert sein als auch implizit durch den aktuellen Zustand eines Quantenregisters oder Analogregisters gegeben sein.

Der Prozess der Vorhersage und/oder Ausgabe der Antwortfunktion kann daher zum einen so implementiert werden, dass eine explizit spezifizierte und in einem künftigen Zeitfenster zu verwendende Antwortfunktion erzeugt und ausgegeben wird, insbesondere bei der auf einem klassischen Computer basierenden Implementierung. Im Falle der auf einem Analogrechner oder Quantenrechner basierenden Implementierung kann der Zustand des jeweiligen Registers selbst nicht ausgegeben werden, aber es kann zumindest eine Spezifikation der Antwortfunktion ausgegeben werden, die hinreichend konkret ist, um es dem Prüfgerät zu erlauben, eine zur Antwortfunktion passende Anfrage während des künftigen Zeitfensters zu formulieren, sodass durch Abgleich der ausgegebenen Antwortfunktionsspezifikation, der Challenge und der tatsächlich vom Prüfobjekt erzeugten Antwort festgestellt werden kann, ob das Prüfobjekt manipuliert wurde. Beispielsweise kann die von einem auf einem Analogrechner basierenden Prüfobjekt ausgegebene Antwort das Überlagerungsmuster spezifizieren, das voraussichtlich entstehen wird, wenn die Schwingungen im Analogregister zu einem künftigen Zeitpunkt mit einer Anfrage-Schwingung einer bestimmten Frequenz und/oder Amplitude überlagert werden, sodass das Prüfgerät durch Erzeugung einer solchen Anfrage-Schwingung testen kann, ob die Antwort, die das resultierende Gesamtüberlagerungsmuster beinhaltet, identisch ist zu dem ausgegebenen Überlagerungsmuster. Dies ist ein Beweis, dass der interne Zustand des Prüfobjekts bzw. dessen Registers nicht manipuliert wurde.

Ein "Quantenprozessor" bzw. "Quantencomputer" ist ein Prozessor, dessen Funktion auf den Gesetzen der Quantenmechanik beruht. Im Unterschied zum klassischen Computer wird seine Funktionsweise nicht auf der Basis der Gesetze der klassischen Physik bzw. Informatik beschrieben, sondern auf der Basis quantenmechanischer Zustände. Ähnlich wie in der klassischen Informatik reichen wenige logische Grundoperationen (die als Quantengatter bezeichnet werden) aus, um jeden beliebigen Rechenvorgang auf dem entsprechenden Quantencomputer zu realisieren. Die einfachste Operation ist die Negation "NOT". Dabei wird der Zustand einer Speichereinheit (Qubit) in sein Gegenteil verkehrt ("negiert"), also z.B. der Spin eines Elektrons um 180° gedreht oder ein Atom vom angeregten in den nichtangeregten Zustand überführt oder umgekehrt. Das entspricht dem Umwandeln einer Null zur Eins bzw. umgekehrt in einem klassischen binären Computer.

Ein "Quantenregister" ist eine Menge an physikalischen Objekten, die Qubits repräsentieren (also z.B. Elektronen mit einem bestimmten Spin oder Atome mit einem bestimmten Anregungszustand) welche zumindest zeitweise in einem verschränkten Zustand vorliegen. Ein Quantenregister erlaubt es, ein Rechenergebnis zu generieren, das erst bei der Messung über eine sogenannte nichtlokale Wechselwirkung erzeugt. Wenn man ein Qubit des Registers (z.B. mit einem Magnetfeld oder mit Lasern) manipuliert, also beispielsweise eine Messung daran durchführt, z.B. im Zuge der Beantwortung einer Anfrage, die bewirkt, dass ein Rechenergebnis vom Quantengitter durch eine Messung in Erfahrung gebracht wird, ändert sich instantan - also ohne Zeitverlust - der Zustand des ganzen Registers. Für den Rechenvorgang ist es wichtig, die quantenmechanischen Zustände des Systems zu erhalten - also die Superposition der einzelnen Qubits und deren Verschränkung miteinander. Ein Quantenregister ist also vorzugsweise dazu ausgebildet, den verschränkten Zustand der Qubits des Registers zumindest für eine gewisse Zeit aufrechtzuerhalten. Die Verschränkung wird beendet, sobald man den Zustand des Quantenregisters misst um ein Messergebnis/Rechenergebnis zu erhalten, da hierbei der Zustand des Quantenregisters und damit auch des ganzen Prüfobjekts auf einen bestimmten Zustand festgelegt wird.

Der Begriff "Verschränkung" bezeichnet einen quantenmechanischen Zustand mehrerer Qubits repräsentierender Teilchen, wonach zwei oder mehr verschränkte Teilchen nicht mehr als einzelne Teilchen mit definierten Zuständen beschrieben werden, sondern nur noch das Gesamtsystem als solches. Lediglich die Abhängigkeiten zwischen den bei einer Messung auftretenden Zuständen der Einzelteilchen ist beschreibbar. Dies führt zu tieferen Beziehungen zwischen den physikalischen Eigenschaften (Observablen) der Systeme, als sie von der klassischen Physik bekannt sind.

Ein "Quantengatter" ist eine zeitlich steuerbare Wechselwirkung der Qubits eines Quantenregisters untereinander oder mit der Umgebung. Ein Quantengatter ist kein technischer Baustein, sondern stellt eine elementare physikalische Manipulation eines oder mehrerer Qubits dar. Wie genau so eine Manipulation aussieht, hängt von der tatsächlichen physikalischen Natur des Qubits ab. So lässt sich der Spin eines Elektrons durch eingestrahlte Magnetfelder beeinflussen, der Anregungszustand eines Atoms durch Laserpulse. Obwohl also ein Quantengatter kein elektronischer Baustein, sondern eine im Verlauf der Zeit auf das Quantenregister angewendete Aktion ist, können Quantenalgorithmen mit Hilfe von Schaltplänen visualisiert werden. Eine Kombination aus einem oder mehreren Quantengattern kann als Antwortfunktion verwendet werden oder um eine Antwortfunktion daraus abzuleiten.

Unter einem "Analogrechner" oder "Analgocomputer" werden hier Gerätekomponenten verstanden, die dazu ausgebildet sind, mit Hilfe von kontinuierlichen mechanischen oder elektrischen Vorgängen, insbesondere Schwingungen von Oszillatoren, ein aggregiertes Ergebnis zu erzeugen, z.B. ein Überlagerungsmuster der Schwingungen. Vorzugsweise kann die Erzeugung des aggregierten Ergebnisses auch die Durchführung von Rechnungen umfassen. Analogcomputer unterscheiden sich von Digitalrechnern dadurch, dass keine Stücke oder Ereignisse gezählt werden und sowohl die Rechenwerte als auch der Zeitverlauf kontinuierlich abgebildet werden.

Bei Analogrechnern wird die Eigenschaft ausgenutzt, dass es in einem bestimmten Gültigkeitsbereich einen Zusammenhang zwischen dem Verhalten von Original und Modell gibt ("Analogieprinzip"). Man kann mit dem Modell das Verhalten des Originals simulieren, weil sich Original und Modell in dem Bereich, der von Interesse ist, ähnlich (lat. "simul") verhalten.

Unter einem Analogregister wird hier ein Bauteil oder ein Bereich eines Analogcomputers verstanden, in welchem sich die Schwingungen mehrerer Oszillatoren überlagern.

**Kurze Beschreibung der Zeichnung**

Nachfolgend werden Ausführungsformen der Erfindung mit Bezug auf die Zeichnung beschrieben. In der Zeichnung zeigt

Fig. 1A     ein Prüfobjekt in Interaktion mit einem Prüfgerät während eines ersten Zeitfensters;

Fig. 1B     das Prüfobjekt in Interaktion mit dem Prüfgerät während eines zweiten Zeitfensters;

Fig. 2      ein Flussdiagramm eines Verfahrens zum Betrieb eines Prüfobjekts;

Fig. 3      ein Flussdiagramm eines Verfahrens zur Integritätsprüfung eines Prüfobjekts;

Fig. 4      den Ablauf einer Initialisierung und wiederholten legitimen Prüfung des Prüfobjekts; und

Fig. 5      den Effekt einer illegitimen Anfrage bzw. eines Angriffs auf den Ablauf einer legitimen Prüfung durch das Prüfgerät.

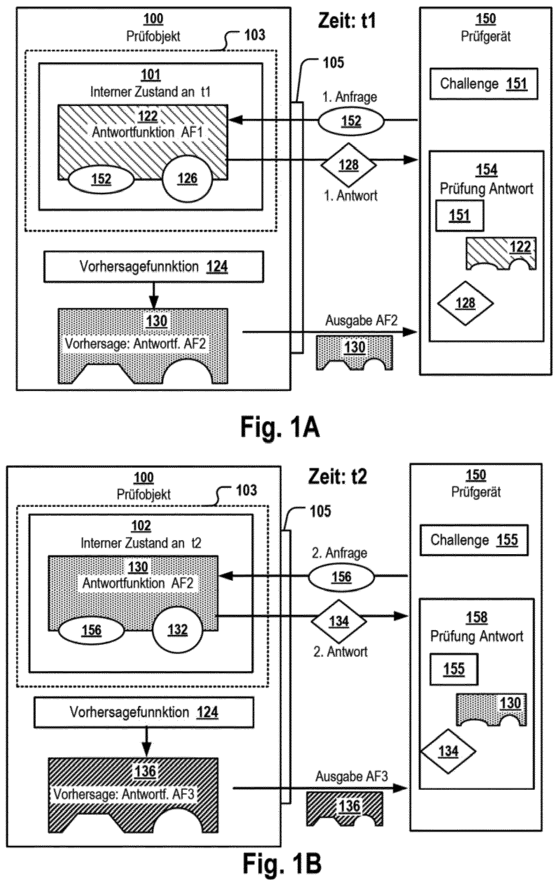

**Figur 1** illustriert ein Prüfobjekt 100 in Interaktion mit einem Prüfgerät 150 während eines ersten Zeitfensters t1.
Beispielsweise kann es sich bei dem Prüfobjekt 100 um eine Kontrolleinheit für eine Schließanlage zu einem zutrittsgeschützten Bereich (zum Beispiel Gebäude oder Gebäudeteile) handeln. Es besteht der Verdacht, dass unberechtigte Dritte versucht haben könnten, die Kontrolleinheit der Schließanlage zu manipulieren oder mittels illegitime Anfragen versucht haben könnten, die interne Funktionsweise der Kontrolleinheit in Erfahrung zu bringen. Um dies festzustellen, wird in regelmäßigen Abständen die Integrität der Kontrolleinheit 100 durch das Prüfgerät 150 geprüft.

Beispielsweise kann es sich bei dem Prüfgerät 150 um ein mobiles Prüfgerät handeln, welches bei sporadisch durchgeführten Kontrollen zur Prüfung der Integrität von vielen als Prüfobjekt verwendeten Kontrolleinheiten von Schließanlagen verwendet wird.

Es ist jedoch auch möglich, dass das Prüfgerät 150 ein festinstalliertes Prüfgerät ist, das zum Beispiel in räumlicher Nähe zu der Kontrolleinheit 100 installiert ist. Das Prüfgerät prüft in regelmäßigen Abständen (nämlich in den "legitimen" Zeitfenstern, für welche das Prüfobjekt 100 eine gültige Antwortfunktion ausgegeben hat), also zum Beispiel mindestens einmal pro Tag, oder mindestens einmal pro Stunde, oder mindestens einmal pro Sekunde, ob das Prüfobjekt bzw. die Kontrolleinheit 100 noch in einem vertrauenswürdigen/integren Zustand ist.

Die Prüfung der Integrität der Kontrolleinheit 100 (bzw. jeglichen anderen Objekts, das als Prüfobjekt verwendet wird), kann wie folgt ablaufen:

zu einem beliebigen Zeitpunkt innerhalb des Zeitfensters t1 hat das Prüfobjekt einen ersten internen Zustand 101, der in einem Informationsspeicher 103 unter Nutzung quantenmechanischer, analog-physikalischer oder digitaler und elektronischer Prinzipien gespeichert (physisch manifestiert) ist. Beispielsweise kann das Prüfobjekt 100 einen Analogcomputer beinhalten, welcher ein Analogregister aus 20 harmonischen Oszillatoren beinhaltet, wobei sich die Schwingungen der 20 harmonischen Oszillatoren zu diesem Zeitpunkt auf eine spezifische Art und Weise überlagern. Die aktuelle Überlagerung der Schwingungen der 20 Oszillatoren stellt den aktuellen internen Zustand des Prüfobjekts zu diesem Zeitpunkt dar. Der Überlagerungszustand ergibt sich aus der Amplitude und Frequenz der einzelnen Oszillatoren, welche wiederum durch eine Steuereinheit des Analogcomputers bestimmt werden. Bereits zu einem vorhergehenden Zeitpunkt (t0) war dem Prüfobjekt bzw. dieser Steuereinheit die Amplitude und Frequenz der Schwingungen der einzelnen Oszillatoren während des Zeitfensters T1 bekannt und wurde dazu verwendet, eine Antwortfunktion AF1 122 zu berechnen und an das Prüfgerät auszugeben. Beispielsweise kann der interne Zustand des Prüfobjekts während des ersten Zeitfensters T1 durch die Spezifikation von Amplitude und Frequenz der Schwingungen der einzelnen Oszillatoren gemäß unten stehende Tabelle definiert sein, wobei der interne Zustand Prüfobjekt-externen Objekten wie zum Beispiel dem Prüfgerät nicht bekannt ist (er kann auch nicht in Erfahrung gebracht werden ohne dass durch die Messung des Überlagerungszustandes sich eben dieser Überlagerungszustand ändert):

| Oszillator-I D | Amplitude während t1 | Frequenz während t1 |
|---|---|---|
| Oszillator 1 | A.Wert1 | F.Wert1 |
| Oszillator 2 | A.Wert2 | F.Wert2 |
| Oszillator 3 | A.Wert3 | F.Wert3 |
| ... | .... | .... |
| Oszillator 20 | A.Wert20 | F.Wert20 |

Bei den Oszillatoren kann es sich zum Beispiel um Schwingkreise handeln, die so aneinander gekoppelt sind, dass Ladungsströme innerhalb der Schwingkreise mit eine für den Schwingkreis/Oszillator spezifischen Weise schwingen und sich mit den Ladungsströmungen bzw. Schwingungen anderer Schwingkreise zu einem Gesamtmuster überlagern.

Gemäß einer Ausführungsform handelt es sich bei den Oszillatoren um Quarzoszillatoren. Ein Quarzoszillator ist eine elektronische Schaltung zum Erzeugen von Schwingungen, die als frequenzbestimmendes Bauelement einen Schwingquarz enthält. Andere übliche elektronische Oszillatorschaltungen, z. B. solche mit LC-Schwingkreisen, können ebenfalls verwendet werden. Alternativen mit identischen Anwendungsbereichen stellen die preisgünstigen Keramikresonatoren oder programmierbare MEMS-Oszillatoren dar, deren frequenzbestimmendes Element ein im Halbleiterchip integriertes Mikrosystem ist.

Das Prüfgerät verfügt über eine Schnittstelle 105 zum Empfang einer Anfrage 152 des Prüfgeräts. Bei der Schnittstelle 105 handelt es sich vorzugsweise um eine Schnittstelle, die dazu ausgebildet ist, über diese eine Anfrage zu empfangen, die eine Schwingung des gleichen Typs ist wie die in dem Analogregister überlagerten Schwingungen (hier der 20 Schwingkreise) oder in eine solche Schwingung umzuwandeln. Das bedeutet, dass der Empfang der ersten Anfrage 152 eine Erzeugung einer Überlagerung der Anfrage-Schwingung mit den bereits im Analogregister existierenden Schwingungen der Oszillatoren bewirkt.

In dem in Figur 1A dargestellten Beispiel hat das Prüfobjekt bereits an einem früheren Zeitpunkt die erste Antwortfunktion 122 vorhergesagt und an das Prüfgerät ausgegeben. Die ausgegebene Antwortfunktion 122 kann z.B. spezifizieren, dass bei einer Anfrage mit einer Anfrage-Schwingung von 16 MHz und einer Amplitude von $40\mu V$ ein bestimmtes Überlagerungsmuster als Antwort zurückgegeben werden wird. Beispielsweise kann diese Überlagerung der (in diesem Beispiel: 21) Schwingungen als eine bestimmte Lissajous-Figur repräsentiert werden, das als erste Antwort 128 an das Prüfgerät zurückgegeben wird.

Das Prüfgerät kann also an einem beliebigen Zeitpunkt innerhalb des ersten Zeitintervalls die Integrität des Prüfobjekts dadurch testen, dass sie eine Challenge erzeugt die zu der zu t1 bereits vorliegenden Spezifikation der Antwortfunktion 122 passt. Das Prüfgerät erzeugt also über die Schnittstelle 105 eine Anfrage-Schwingung von 16 MHz und einer Amplitude von 40$\mu$V, die sich mit den Schwingungen der 20 Oszillatoren überlagert. Durch die Überlagerung "errechnet" das Prüfobjekt in analoger Weise eine Antwort, nämlich in Form eines Überlagerungsmusters, das z.B. eine Lissajous-Figur sein kann. Die Schwingung jedes der Oszillatoren repräsentiert einen Wert 126, der den internen Zustand des Prüfobjekts bestimmt oder mitbestimmt.

Für den Fall, dass der Überlagerungszustand der 20 Oszillatoren dem Zustand entspricht wie an Zeitpunkt t0 vorhergesagt und falls die erste Anfrage 152 auch die in der Antwortfunktion 122 spezifizierten Eigenschaften aufweist (also bestimmte Frequenz und Amplitude), wird die Überlagerung der Anfrage-Schwingung und der bereits vorhandenen Oszillatoren-Schwingungen die Lissajours-Figur ergeben, die bereits vorab dem Prüfgerät als die zum Zeitfenster t1 gültige Antwortfunktion mitgeteilt wurde.

Durch Vergleich der als Antwort 128 erhaltenen Lissajours-Figur mit der Lissajour-Figur, die auf Basis der Challenge 151, also der Anfrage-Schwingung einer Frequenz von 16 MHz und einer Amplitude von 40$\mu$V, zu erwarten gewesen wäre und die dem Prüfgerät als Teil der Antwortfunktion 122 auch vorab mitgeteilt wurde, kann das Prüfgerät feststellen, ob das Prüfobjekt manipuliert wurde, denn jeder illegitime Zugriff hätte den Überlagerungszustand der Schwingungen der Oszillatoren verändert.

Nachdem das Prüfobjekt die Antwort 128 übermittelt hat, ändert es seinen internen Zustand automatisch. Beispielsweise kann dies dadurch erfolgen, dass die Schwingung von mindestens einem der Oszillatoren auf eine andere Frequenz und/oder andere Amplitude gesetzt wird. Als Ergebnis dieser Veränderung würde eine Überlagerung des Anfrage-Schwingung 152 jetzt zu einem anderen als dem zurückgegebenen Antwort 128 führen.

Nachdem der interne Zustand geändert wurde sagt das Prüfobjekt eine während eines künftigen Zeitfensters t2 von Prüfgerät verwendete Antwortfunktion 130 vorher und/oder erzeugt diese. Die Vorhersage und/oder Erzeugung der Antwortfunktion 130 wird von einer Vorhersagefunktion 124 durchgeführt. Dabei kann es sich um einen Simulationsschaltkreis handeln, der zum Zwecke der Simulation eine bestimmte Anfrage-Schwingung auf die überlagerten Schwingungen im Analogregister überlagert um das resultierende Überlagerungsmuster zu erfassen.

Die ausgegebene Antwortfunktion 130 kann z.B. spezifizieren, dass bei einer Anfrage mit einer Anfrage-Schwingung von 17.6 MHz und einer Amplitude von 32 $\mu$V ein bestimmtes, zweites Überlagerungsmuster als Antwort 134 zurückgegeben werden wird. Vorzugsweise gibt das Prüfgerät außerdem eine Angabe über das zweite Zeitfenster t2 aus, innerhalb welchem der interne Zustand des Analogregisters so beschaffen ist, dass eine Anfrage mit den richtigen Schwingungs-Eigenschaften (der richtigen Challenge) und die Überlagerung dieser Anfrage-Schwingung 156 mit den Schwingungen des Registers zu der zweiten Lissajours-Figur LF2 als Antwort führen würden. Figur 1A ist zu entnehmen, dass die vorhergesagte und/oder vorab erzeugte Antwortfunktion 130 an das Prüfgerät übertragen wird, um im Kontext einer Integritätsprüfung innerhalb eines zweiten Zeitfensters t2 verwendet zu werden. Dies ist in Figur 1B im Einzelnen dargestellt.

**Figur 1B** zeigt das Prüfobjekt 100 in Interaktion mit dem Prüfgerät 150 während eines zweiten Zeitfensters t2, das zeitlich nach t1 kommt.

Der innere Zustand des Prüfobjekts während des Zeitfensters T2 ist also bestimmt durch eine Überlagerung der Schwingungen von 20 Oszillatoren. Die Schwingung jedes der Oszillatoren repräsentiert einen Wert 132, der den internen Zustand des Prüfobjekts bestimmt oder mitbestimmt.

Zunächst erzeugt das Prüfgerät eine Challenge 155, zum Beispiel einen Zufallswert, der die Frequenz und/oder Amplitude einer Anfrage-Schwingung 136 bestimmt, die als zweite Anfrage über die Schnittstelle 105 an das Prüfobjekt 100 gesendet wird. Die Challenge kann auch auf Basis der Angaben der ausgegebenen Antwortfunktion 130 erstellt werden. Die ausgegebene Antwortfunktion 130 beispielsweise spezifiziert, dass eine Anfrage-Schwingung mit einer bestimmten Frequenz und/oder einer bestimmten Amplitude während des Zeitfensters T2 eine bestimmte Lissajous-Figur erzeugt, können die Angaben bezüglich Frequenz und/oder Amplitude der Antwortfunktion 130 verwendet werden, um die Challenge 155 entsprechend dieser Angaben zu erzeugen. Die Anfrage-Schwingung kann z.B. eine Schwingung von 17.6 MHz und einer Amplitude von 32 $\mu$V aufweisen.

Das Prüfgerät erzeugt eine Anfrage, die die Challenge beinhaltet. Beispielsweise kann das Prüfgerät eine Anfrage-Schwingung erzeugen, welche die Amplitude und/oder Frequenz aufweist, die in der Antwortfunktion 130 spezifiziert sind.

Die Anfrage-Schwingung überlagert sich mit den Schwingungen der 20 Oszillatoren, die den aktuellen inneren Zustand des Prüfobjekts während des Zeitfensters t2 ausmachen, sodass ein neuer überlagerter Zustand entsteht. Dieser Überlagerungszustand von 21 Schwingungen kann als neue Lissajours-Figur LF2 erzeugt werden. Diese neue Lissajours Figur LF2 wird als zweite Antwort 134 zurückgegeben. In der vorhergesagten zweiten Antwortfunktion 130, die dem Prüfgerät vorliegt, kann spezifiziert sein, dass das Prüfobjekt während des Zeitfensters t2 eine Anfrage-Schwingung von 17.6 MHz und einer Amplitude von 32 $\mu$V mit der Lissajours Figur LF2 beantworten wird. Durch Abgleich dieser Information 130, der Challenge (also der Amplitude und/oder Frequenz der Anfrage-Schwingung 156) und der erhaltenen Antwort 134 kann das Prüfgerät prüfen, ob das Prüfobjekt seit der letzten Prüfung bzw. überhaupt manipuliert wurde. Denn eine illegitime Anfrage nach Ende von t1 und vor dem Beginn von t2 hätte dazu geführt, dass sich der Überlagerungszustand der Schwingungen verändert hätte und damit auch die auf die zweite Anfrage 136 zurückgegebene Lissajours-Figur.

Nachdem das Prüfgerät die Antwort 134 versendet hat, ändert es abermals seinen internen Zustand. Beispielsweise kann es einen oder mehrere der Oszillatoren so manipulieren, dass sich die Amplitude und/oder Frequenz von ein oder mehreren Schwingungen ändert.

Durch die Änderung wird ein neuer interner Zustand erzeugt, der die Vorhersage einer neuen Antwortfunktion 136 ermöglicht. Die vorhergesagte Antwortfunktion 136 wird ausgegeben. Die ausgegebene Antwortfunktion 136 gibt an, wie das Prüfobjekt 100 während eines künftigen Zeitfensters t3 (hier nicht gezeigt) eine Anfrage mit bestimmten Eigenschaften, die eine Challenge darstellen, in Abhängigkeit von seinem künftigen Zustand während des Zeitfensters t3 beantworten wird.

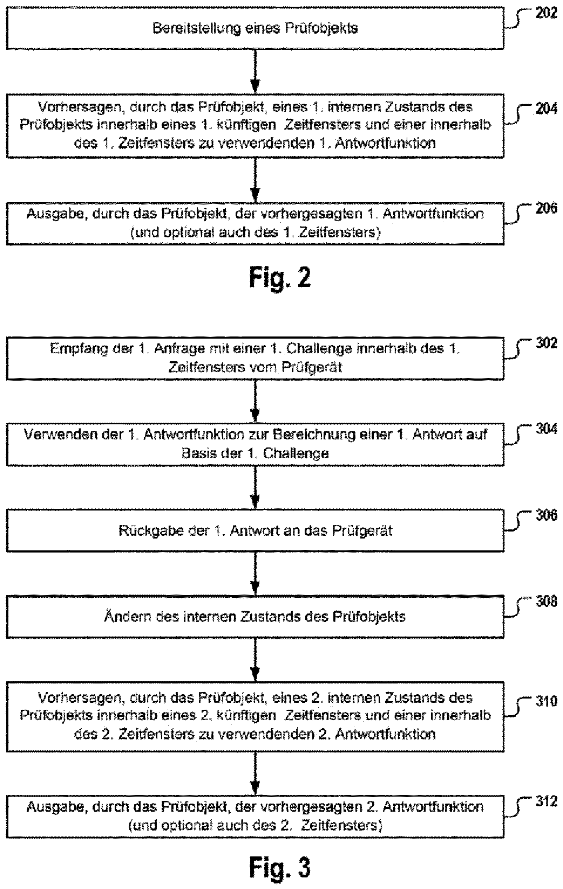

**Figur 2** zeigt ein Flussdiagramm eines Verfahrens zum Betrieb eines Prüfobjekts 100. Zunächst in Schritt 202 wird ein Prüfobjektobjekt bereitgestellt, das die für Ausführungsformen der Erfindung geschilderten Eigenschaften aufweist. Das Prüfobjekt kann als Quantencomputer oder Analogcomputer ausgebildet sein und eignet sich in diesem Fall besonders als immobile Applikation, zum Beispiel als eine Kontrolleinheit für eine Schließeinrichtung. Das Prüfobjekt kann aber auch einen klassischen Computer beinhalten, der eine Objektfunktion beinhaltet, sodass mittels Software ein Verhalten implementiert wird, welches ähnlich oder analog zu den physikalischen Eigenschaften der genannten alternativen Implementierungen ist. Diese Variante eignet sich besonders gut, um Prüfobjekte in Form von Identitätsdokumenten, zum Beispiel Ausweisen, bereitzustellen.

In Schritt 204 sagt das Prüfobjekt einen ersten internen Zustand vorher, den das Prüfobjekt während eines künftigen ersten Zeitfensters t1 haben wird. Die Vorhersage kann zum Beispiel darauf beruhen, dass das Prüfobjekt ein Quantenregister oder ein Analogregister auf eine bestimmte Art und Weise initialisiert, sodass unter Berücksichtigung quantenmechanischer und/oder konventioneller physikalische Gesetze und Prinzipien der künftige Zustand des Quantenregisters bzw. Analogregisters während des Zeitfensters t1 vorhersagbar ist. Unter Vorhersage wird hier auch die Möglichkeit verstanden, dass das Prüfobjekt bzw. seine Komponenten und/oder Softwarefunktionen den aktuellen und künftigen Zustand während des Zeitfensters t1 aktiv setzen. Das Prüfgerät kann zum Beispiel zu einem aktuellen Zeitpunkt einen Zufallswert erzeugen, und in Zufallswert verwenden, um den internen Zustand des Prüfobjekts während des Zeitfensters t1 in spezifischer Weise zu verändern, der vorhersagbar/berechenbar ist, da der Zufallswert ihr schon vorab erzeugt wurde und bekannt ist. Von außen ist diese Vorhersage jedoch nicht möglich.

In Schritt 206 gibt es Prüfgerät die vorhergesagte erste Antwortfunktion aus, um es einen Prüfgerät zu ermöglichen, während des ersten Zeitfensters eine Anfrage mit einer Challenge an das Prüfobjekt zu senden und anhand der Antwort zu prüfen, ob das Prüfobjekt korrumpiert wurde. Vorzugsweise wird in dem Schritt oder zu einem anderen Zeitpunkt vor Eintreten des ersten Zeitfensters auch eine Spezifikation des ersten Zeitfensters ausgegeben. Es ist auch möglich, dass das erste Zeitfenster dem Prüfgerät vorab bekannt ist. Beispielsweise kann im Zuge der Initialisierung des Prüfobjekts festgelegt werden, wann das erste Zeitfenster beginnt, während welchem eine legitime Anfrage an das Prüfobjekt gestellt werden kann. Dieses und alle weiteren Zeitfenster für legitime Anfragen haben eine feste Dauer und einen festen Abstand, die dem Prüfgerät bekannt sind, sodass es Prüfgerät weiß, wann es eine prüfbare Anfrage senden kann, ohne das Prüfobjekt zu korrumpieren.

Das Ergebnis des in Figur 2 dargestellten Verfahrens ist das Vorliegen eines Prüfobjekts in einem Zustand, in welchem es zumindest während des künftigen ersten Zeitfensters von einem Prüfgerät daraufhin geprüft werden kann, auf zwischenzeitlich eine illegitime Anfrage oder ein Angriff auf das Prüfobjekt stattgefunden hat, das den internen Zustand des Prüfobjekts verändert hat. In diesem Fall wird nämlich notwendigerweise während des ersten Zeitfensters eine andere Antwortfunktion zur Erzeugung der Antwort verwendet werden als vorhergesagt, denn die verwendete Antwortfunktion hängt jeweils vom internen Zustand des Prüfobjekts ab.

Beispielsweise kann das Prüfobjekt eine Kontrolleinheit sein, die in der Nähe eine Tür verbaut ist, deren Öffnung die Kontrolleinheit steuert. Das Prüfgerät kann in räumlicher Nähe zur Kontrolleinheit verbaut sein und zeitlich mit der Kontrolleinheit synchronisiert sein. Das bedeutet, dass das Prüfgerät dazu konfiguriert ist, regelmäßig und ausschließlich innerhalb der legitim Zeitfenster (für die das Prüfobjekt jeweils vorab eine gültige Antwortfunktion ausgibt) eine Anfrage an das Prüfobjekt zusenden um eine Antwort zu bekommen, die Auskunft darüber gibt, ob zwischenzeitlich eine illegitime Anfrage an die Kontrolleinheit gesendet oder die Kontrolleinheit anderweitig manipuliert wurde. Das Gesamtsystem aus Kontrolleinheit und Prüfgerät bildet somit ein Kontrollsystem für die Tür, welches intrinsische erkennt, wenn ein Angriff stattgefunden hat. In diesem Fall kann das Kontrollsystem beispielsweise dazu konfiguriert sein, einen Alarm auszulösen und/oder die Tür dauerhaft zu schließen.

**Figur 3** zeigt ein Flussdiagramm eines Verfahrens zur Integritätsprüfung eines Prüfobjekts.

In Schritt 302 empfängt das Prüfobjekt während des ersten Zeitfensters eine erste Anfrage mit einer ersten Challenge, wie dies im Hinblick auf Figuren 1A und 1B beschrieben wurde. In Schritt 304 wird eine erste Antwort unter Verwendung der ersten Antwortfunktion berechnet und in Schritt 306 an das Prüfgerät zurückgegeben.

Nach dem zurückgeben der ersten Antwort ändert das Prüfobjekt seinen internen Zustand in Schritt 308 und sagen auf Basis des geänderten Zustands in Schritt 310 eine zweite Antwortfunktion vorher, die vom Prüfobjekt während eines künftigen zweiten Zeitfensters verwendet werden wird.

Beispielsweise können Qubits eines Quantenregisters in einen neuen, definierten Anregungszustand und/oder Spin-Ausrichtungszustand versetzt werden. Die Zustände der Qubits sind miteinander verschränkt, erlauben aber eine Vorhersage des Ergebnisses einer künftigen Messung des Zustands des Quantenregisters, bei welcher die Verschränkung beendet werden wird. Amplitude und/oder Frequenz von ein oder mehreren Oszillatoren eines Analogcomputers können auf spezifische Weise verändert werden, sodass das daraus resultierende aktuelle und/oder künftige Überlagerungsmuster vorhergesagt werden kann. Eine Objektfunktion kann einen Zufallswert erzeugen und dadurch seinen internen Zustand ändern. Der neue Zufallswert kann verwendet werden, um eine zweite Antwortfunktion zu erzeugen (und damit auch vorherzusagen), die während eines künftigen zweiten Zeitfensters verwendet werden wird.

Schließlich gibt das Prüfobjekt den Schritt 312 die vorhergesagte zweite Antwortfunktion und optional auch eine Spezifikation des Beginns und Endes des zweiten Zeitfensters aus.

Beispielsweise können die in Figur 3 beschriebenen Schritte Teil eines kontinuierlich durchgeführten Datenaustauschprotokolls zwischen einem Prüfobjekt und einem mit diesem synchronisierten Prüfgerät sein. Das Protokoll stellt sicher, dass das Prüfgerät regelmäßig eine Anfrage innerhalb eines legitim Zeitfensters an das Prüfobjekt schickt und anhand der jeweils erhaltenen Antwort prüft, ob das Prüfobjekt manipuliert wurde. Die in Figur 3 dargestellten Schritte können also kontinuierlich für eine beliebige Anzahl weiterer künftiger Zeitfenster durchgeführt werden, so lange, bis das Ende der Lebenszeit des Prüfobjekts und/oder des Lesegeräts erreicht ist oder bis eine Manipulation des Prüfobjekts erkannt wurde.

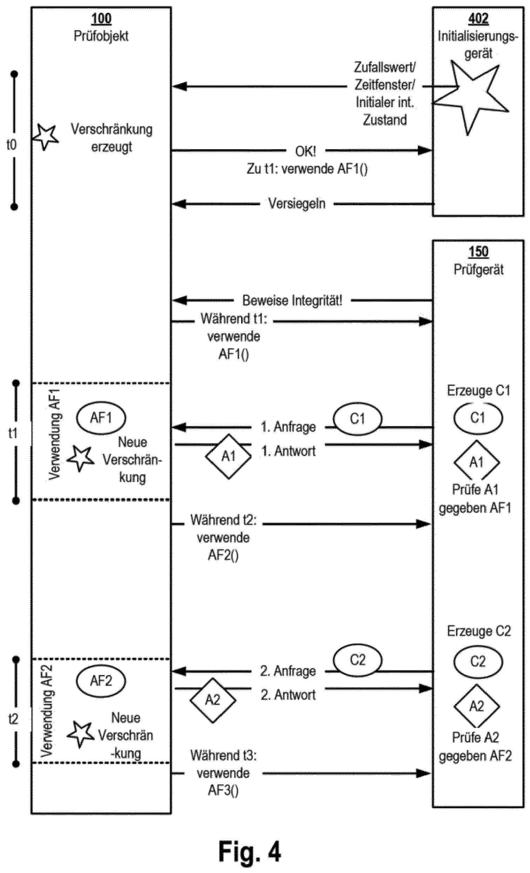

**Figur 4** zeigt den Ablauf einer Initialisierung und wiederholten legitimen Prüfung des Prüfobjekts.

In dieser Ausführungsvariante wird ein Initialisierungsgerät 402 verwendet, um zunächst den initialen Zustand des Prüfobjekts festzulegen. Beispielsweise kann im Zuge der Initialisierung festgelegt werden, wie der Zustand der Qubits in einem Quantenregister beschaffen sind, wie die Amplitude und/oder Frequenz von Schwingungen mehrerer Oszillatoren eines Analogcomputers beschaffen sind oder wie eine Objektfunktion eines klassischen Computers mittels ein oder mehrere Zufallswerte initialisiert wird.

Im Zuge des Initialisierungsprozesses während des Zeitfensters t0 kann auch festgelegt werden, wann das erste künftige Zeitfenster beginnt, für welches eine erste Antwortfunktion vorhergesagt und ausgegeben wird, wie lange das erste Zeitfenster dauert, und welche zeitlichen Intervalle legitime Zeitfenster voneinander trennen.

Bei Quantenrechnern ist zu beachten, dass das erste künftige Zeitfenster nicht weiter in der Zukunft liegt, als die Kohärenzzeit des initialisierten Quantenzustandes. Zum Anmeldezeitpunkt besitzt beispielsweise der Quantenrechner IBM Q System One eine mittlere Kohärenzzeit von 133 $\mu$s. Gemäß Ausführungsformen der Erfindung wird im Zuge der Initialisierung der Beginn des ersten künftigen Zeitfensters so festgelegt, dass der Beginn weniger als 130$\mu$s, vorzugsweise weniger als 100 $\mu$s, in der Zukunft liegt.

Nach erfolgreicher Beendigung des Initialisierungsprozesses wird das Prüfobjekt 100 "versiegelt", d. h., es wird in einen Zustand versetzt, in dem es nicht mehr möglich ist, die Initialisierung ohne weiteres erneut durchzuführen. Beispielsweise kann die Initialisierung nur ein einziges Mal möglich sein oder eine erneute Initialisierung kann zusätzliche Schritte erfordern, zum Beispiel eine Authentifizierung eines Nutzers gegenüber dem Prüfobjekt.

Bei der Versiegelung bei Quantencomputer ist die Versiegelung gemäß Ausführungsformen der Erfindung abgeschlossen, wenn neben den Zuständen der Qubits in den Quantenregistern auch der oder die Quantenschaltkreis(e), der/die auf die Qubits in den Quantenregistern wirkt, definiert wurde. Ein Quantenschaltkreis ist dabei von logischen Gateoperationen definiert, die auf dem Quantenrechner ausgeführt werden können.

Falls das Prüfobjekt einen klassischen Computer mit einer Objektfunktion beinhaltet kann die Initialisierung z.B. darin bestehen, dass die Objektfunktion oder eine Rumpf-funktion, die zur Erzeugung der Zeitfensterspezifischen Antwortfunktion verwendet wird, mit einem im Zuge der Initialisierung an das Prüfobjekt übermittelten Zufallswert initialisiert wird. Sobald die Objektfunktion und/oder die von dieser verwendete Rumpffunktion der Antwortfunktion einmal initialisiert ist, ist es nicht mehr möglich, diese Objektfunktion oder Rumpffunktion zu überschreiben oder erneut zu initialisieren.

Der Versiegelungsschritt ist jedoch optional. In Ausführungsformen in welchen eine erneute Initialisierung des Prüfobjekts ohne weiteres möglich ist führt eine erneute Initialisierung dazu, dass die vor der erneuten Initialisierung vorhergesagten und ausgegebenen Antwortfunktionen nicht mehr für die Prüfung der Prüfobjektintegrität herangezogen werden können, da die erneute Initialisierung zu einer Änderung des internen Zustands des Objekts geführt hat.

Nachdem das Prüfobjekt einmal initialisiert und versiegelt ist, kann der Datenaustausch zwischen Prüfobjekt und Prüfgerät 150 ablaufen wie z.B. bereits für die Figuren 1A, 1B, 2 und 3 beschrieben. Die Beantwortung jeder legitimen Anfrage führt zu einer Änderung des internen Zustands des Prüfobjekts und, im Falle einer quantenmechanischen Implementierung, damit verbunden zu einer Erzeugung eines neuen verschränkten Zustands mehrerer Qubits.

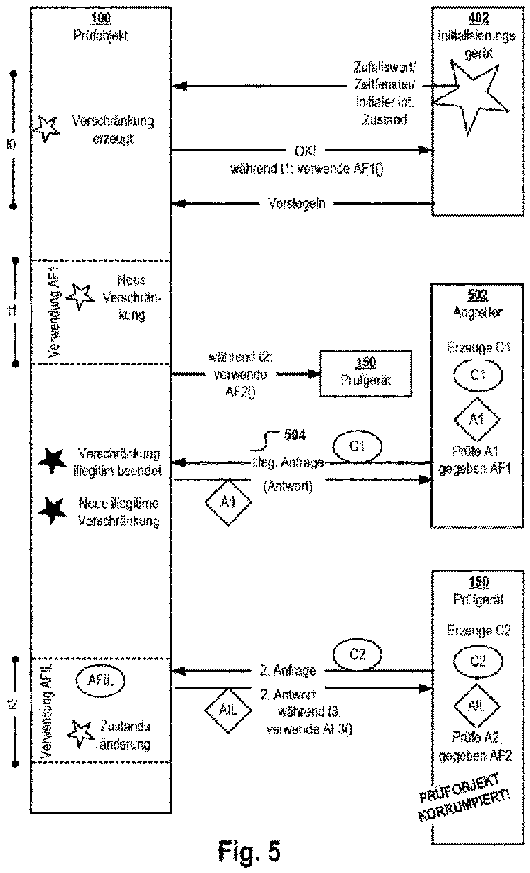

**Figur 5 zeigt** den Effekt einer illegitimen Anfrage bzw. eines Angriffs 504 durch einen Angreifer 502 auf den Ablauf einer legitimen Prüfung durch das Prüfgerät.

Zunächst wird das Prüfobjekt von einem Initialisierungsgerät 402 initialisiert, d.h., sein interner Zustand wird auf einen definierten Ausgangszustand gesetzt, auf dessen Basis die erste Antwortfunktion AF1 für das erste Zeitfenster t1 vorhergesagt und ausgegeben wird. Die Prüfung der Antwort A1 ergibt, dass das Prüfobjekt integer und vertrauenswürdig ist, da die erhaltene Antwort A1 der Antwort entspricht, die auf Basis der Challenge A1 und des für das erste Zeitfenster t1 ausgegebenen ersten Antwortfunktion AF1 zu erwarten war.

Das Prüfobjekt ändert seinen internen Zustand und veröffentlicht für das nächste künftigen Zeitfenster t2 die Antwortfunktion AF2, von welcher das Prüfobjekt auf Basis seines aktuellen internen Zustands vorhersagt dass es diese während des Zeitfensters t2 zur Beantwortung einer Anfrage verwenden wird.

Im Zeitraum zwischen dem ersten und dem zweiten Zeitfenster findet nun aber ein Angriff statt: das Gerät 502 des Angreifers kennt die legitimen Zeiten t1, t2 nicht, binnen welcher das Prüfobjekt so auf Anfragen antwortet wie dies vorhergesagt wurde. Deshalb ist die Chance hoch, dass der Angreifer seine illegitime Anfrage außerhalb eines legitimen Zeitfensters an das Prüfgerät sendet und/oder eine Challenge verwendet, das die zum Zeitpunkt des Empfangs gültige Antwortfunktion nicht wie vorhergesagt beantworten kann. Es ist zwar möglich, dass in manchen Ausführungsformen das Prüfobjekt auch eine illegitime Anfrage beantwortet, die Antwort kann jedoch nicht mehr zur Integritätsprüfung verwendet werden denn der interne Zustand des Prüfobjekts und damit auch die Verwendete Antwortfunktion zu einem Zeitpunkt außerhalb eines legitimen Fragezeitfensters ist Prüfobjekt-externen Objekten unbekannt.

In jedem Fall wird die illegitime Anfrage jedoch dazu führen, dass sich der interne Zustand des Prüfobjekts so ändert, dass das Prüfobjekt während des zweiten Zeitfensters eine andere, "illegitime" Antwortfunktion AFIL verwenden wird um die Anfrage zu beantworten, nicht die zuvor ausgegebene AF2. Somit ergibt die Prüfung der mit der Antwortfunktion AFIL erzeugte Antwort AIL, dass diese Antwort AIL nicht durch Anwenden der ausgegebenen Antwortfunktion AF2 auf die Challenge C3 erhalten werden kann, und dass das Prüfobjekt als korrumpiert anzusehen ist.

Vorteilhafte Ausführungsformen umfassen beispielsweise die folgenden Merkmale:

1. Verfahren zum Betrieb eines physischen Objektes mit prüfbarer Integrität, umfassend:

- Bereitstellung (202) eines Prüfobjektes (100) als das physische Objekt, wobei

  ◦ das Prüfobjekt einen internen Zustand (101, 102) aufweist;
  ◦ das Prüfobjekt dazu ausgebildet ist, eine Anfrage (152, 156) mit einer Challenge (151, 155) zu empfangen;
  ◦ das Prüfobjekt dazu ausgebildet ist, eine Antwortfunktion (122, 130, 136) zu verwenden um eine Antwort auf die Anfrage zu erzeugen, wobei die Antwortfunktion vom internen Zustand des Prüfobjekts zum Zeitpunkt des Erhalts der Anfrage abhängt;
  ◦ wobei der interne Zustand und die von diesem abhängige Antwortfunktion durch Prüfobjekt-externe Objekte (150, 502) nicht vorhergesagt werden können, wobei ein Versuch, den internen Zustand oder die von dem Prüfobjekt verwendete Antwortfunktion durch Zugriff auf das Prüfobjekt festzustellen, den aktuellen internen Zustand und damit auch die von diesem abhängige Antwortfunktion verändert;

- Vorhersagen (204), durch das Prüfobjekt, eines ersten internen Zustands (101) des Prüfobjekts innerhalb eines ersten künftigen Zeitfensters (t1) und Vorhersage einer ersten Antwortfunktion (122), die das Prüfobjekt zur Beantwortung einer innerhalb des ersten künftigen Zeitfensters empfangenen ersten Anfrage in Abhängigkeit von seinem vorhergesagten ersten internen Zustand verwenden wird;
- Ausgabe (206), durch das Prüfobjekt, der vorhergesagte ersten Antwortfunktion, um dem Prüfgerät eine Prüfung der Integrität des Prüfobjekts innerhalb des ersten künftigen Zeitfensters unter Verwendung der ausgegebenen, vorhergesagten ersten Antwortfunktion zu ermöglichen.

2. Verfahren nach Anspruch 1, ferner umfassend:

- Ausgabe, durch das Prüfobjekt, des ersten künftigen Zeitfensters, um dem Prüfgerät eine Prüfung der Integrität des Prüfobjekts innerhalb des ersten künftigen Zeitfensters zu ermöglichen.

3. Verfahren nach Anspruch 1 oder 2, wobei die Ausgabe der Antwortfunktion und/oder die Ausgabe des künftigen Zeitfensters, innerhalb welchem die ausgegebene Antwortfunkton von dem Prüfobjekt verwendet werden wird, nur an Prüfgeräte, die sich zuvor gegenüber dem Prüfobjekt erfolgreich authentifiziert haben, erfolgt, wobei die Ausgabe insbesondere über eine geschützte Datenverbindung erfolgt.

4. Verfahren nach einem der vorigen Ansprüche, ferner umfassend:

- Empfang (302) der ersten Anfrage (152) des Prüfgeräts (150) durch das Prüfobjekt (100), wobei die erste Anfrage eine erste Challenge (151) beinhaltet;
- falls die erste Anfrage innerhalb des ersten künftigen Zeitfensters (t1) empfangen wird:

  ∘ Verwenden (304) der vorhergesagten und ausgegebenen ersten Antwortfunktion (122) zum Erzeugen der ersten Antwort (128) unter Verwendung der ersten Challenge (151);
  ∘ Zurückgeben (306) der ersten Antwort (128) an das Prüfgerät, um dem Prüfgerät die Prüfung der Integrität des Prüfobjekts anhand der ersten Challenge, der ersten veröffentlichten Antwortfunktion und anhand der Antwort zu ermöglichen; und
  ∘ Ändern (308) des internen Zustands des Prüfobjekts.

5. Verfahren nach Anspruch 4, ferner umfassend, nachdem der interne Zustand des Prüfobjekts geändert wurde:

- Vorhersagen (310), durch das Prüfobjekt, eines zweiten internen Zustands (102) des Prüfobjekts innerhalb eines zweiten künftigen Zeitfensters (t2) und Vorhersage einer zweiten Antwortfunktion (130), die das Prüfobjekt zur Beantwortung einer innerhalb des zweiten künftigen Zeitfensters empfangenen zweiten Anfrage (156) in Abhängigkeit von seinem vorhergesagten zweiten internen Zustand verwenden wird;
- Ausgabe (312), durch das Prüfobjekt, der vorhergesagte zweiten Antwortfunktion, um dem Prüfgerät eine Prüfung der Integrität des Prüfobjekts innerhalb des zweiten künftigen Zeitfensters unter Verwendung der ausgegebenen, vorhergesagten zweiten Antwortfunktion zu ermöglichen;
- Optional zudem Ausgabe (312), durch das Prüfobjekt, des zweiten künftigen Zeitfensters, um dem Prüfgerät eine Prüfung der Integrität des Prüfobjekts innerhalb des zweiten künftigen Zeitfensters zu ermöglichen.

6. Verfahren nach einem der vorigen Ansprüche, ferner umfassend:

- Empfang einer illegitimen Anfrage (504), wobei eine illegitime Anfrage jede Anfrage ist, die durch das Prüfobjekt zu einem Zeitpunkt empfangen wird, der außerhalb eines von dem Prüfobjekt ausgegebenen künftigen Zeitfensters liegt und Einfluss auf den internen Zustand des Prüfobjekts hat; und
- In Reaktion auf die illegitime Anfrage, Ändern des internen Zustands des Prüfobjekts, sodass das Prüfobjekt zum nächsten künftigen Zeitfenster, für welches eine künftige Antwortfunktion vorhergesagt und ausgegeben wurde, eine andere als diese vorhergesagte und ausgegebene Antwortfunktion verwendet.

7. Verfahren nach Anspruch 6, ferner umfassend:

- Empfang einer legitimen Anfrage von dem Prüfgerät innerhalb eines Zeitfensters, für welches das Prüfobjekt eine legitime Antwortfunktion vorhergesagt und ausgegeben hat, wobei das legitime Zeitfenster dem Zeitpunkt des Empfangs der illegitimen Anfrage nachfolgt;
- Verwenden der anderen Antwortfunktion anstelle der ausgegebenen legitimen Antwortfunktion zum Erzeugen einer illegitimen Antwort auf die legitime Anfrage, wobei die andere Antwortfunktion eine Antwortfunktion ist, die von dem Prüfobjekt niemals oder zumindest nicht für diesen Zeitpunkt ausgegeben wurde; und
- Zurückgeben der illegitimen Antwort an das Prüfgerät.

8. Verfahren nach einem der vorigen Ansprüche, wobei:

- das Prüfobjekt einen Quantencomputer beinhaltet;
- der Quantencomputer ein Quantenregister mit mehreren Qubits beinhaltet;
- der interne Zustand des Prüfobjekts durch den Zustand des Quantenregisters bestimmt oder mitbestimmt ist;
- die Antwortfunktion ein Quantengatter ist, wobei das Quantengatter eine unitäre Operation, die auf den quantenmechanischen Zustand der Qubits des Quanten-Registers nach quantenmechanischen Prinzipien wirkt, ist;
- der Versuch, den internen Zustand oder die Antwortfunktion durch Zugriff auf das Prüfobjekt festzustellen, den Zustand des Quantenregisters dadurch verändert, dass eine Verschränkung der Qubits des Quantenregisters durch diesen Versuch beendet wird;
- die vorhergesagte und ausgegebene ersten Antwortfunktion ein erstes Quantengatter aus einer Vielzahl unterschiedlicher von dem Prüfobjekt unterstützter Quantengatter ist, welches das Prüfobjekt innerhalb des ersten künftigen Zeitfensters als die ersten Antwortfunktion verwenden wird.

9. Verfahren nach Anspruch 8, wobei:

- wobei die Qubits durch Spins von Elektronen repräsentiert sind und wobei der Empfang der Anfrage mit der Challenge eine Beeinflussung des Spins von ein oder mehreren Elektronen durch zumindest ein (von einem externen Gerät, z.B. Prüfgerät erzeugtes) Magnetfeld ist, wobei die Challenge eine Stärke und/oder Ausrichtung des zumindest einen Magnetfelds ist.

10. Verfahren nach Anspruch 8, wobei:

- wobei die Qubits durch Anregungszustände von Atomen repräsentiert sind und wobei der Empfang der Anfrage mit der Challenge eine Beeinflussung des Anregungszustandes von ein oder mehreren Elektronen durch zumindest einen (von einem externen Gerät, z.B. Prüfgerät erzeugten) Laserpuls ist, wobei die Challenge die Dauer und/oder Wellenlänge des zumindest einen Laserpulses ist.

11. Verfahren nach einem der vorigen Ansprüche, wobei:

- das Prüfobjekt einen Analogcomputer beinhaltet;
- der Analogcomputer dazu ausgebildet ist, Berechnungen mit Hilfe von mehreren kontinuierlichen mechanischen oder elektrischen Vorgängen durchzuführen, wobei die Vorgänge Schwingungen harmonischer Oszillatoren sind;
- wobei der Analogcomputer ein Analogregister beinhaltet, welches eine Überlagerung der Schwingungen enthält;
- der interne Zustand des Prüfobjekts durch den Zustand des Analogregisters bestimmt oder mitbestimmt ist;
- die ausgegebene Antwortfunktion eine Spezifikation eines Überlagerungsmusters beinhaltet, welches durch eine spezifische Auswahl der Oszillatoren deren Schwingungen während eines künftigen Zeitfensters überlagert werden sollen und/oder durch spezifische Eigenschaften der Oszillatoren deren Schwingungen während eines künftigen Zeitfensters überlagert werden sollen, erhalten wird.

12. Verfahren nach Anspruch 11, wobei das Überlagerungsmuster ein durch Superposition der Schwingungen der Oszillatoren erhaltenes Muster ist.

13. Verfahren nach Anspruch 11 oder 12, wobei das Überlagerungsmuster ein Überlagerungsmuster mehrerer harmonischer Schwingungen verschiedener Frequenz ist, insbesondere eine Überlagerung mehrerer rechtwinkelig zueinander stehender harmonischer Schwingungen ist, insbesondere eine Lissajous-Figur ist.

14. Verfahren nach einem der Ansprüche 11-13, wobei die Schwingungen ausgewählt sind aus einer Gruppe umfassend:

- Elektrische Schwingungen innerhalb von aneinander gekoppelten Schaltkreisen;
- Lichtwellen, die von Lasern ausgesendet werden;
- Schallwellen, die von Schallquellen ausgesendet werden.

15. Verfahren nach einem der vorigen Ansprüche 1-7, wobei:

- das Prüfobjekt einen klassischen Computer beinhaltet, wobei ein klassischer Computer ein Rechner ist, das mittels programmierbarer Rechenvorschriften Daten verarbeitet, wobei die Datenverarbeitung nicht mit quantenmechanischen Gesetzen sondern mit den Gesetzen der klassischen Physik und Informatik beschreibbar ist;
- auf dem klassischen Computer eine Software mit einer Objektfunktion ausgeführt wird,

    ◦ wobei die Objektfunktion den internen Zustand des Prüfobjekts repräsentiert;
    ◦ wobei die Objektfunktion dazu ausgebildet ist, während verschiedener Zeitfenster verschiedene Antwortfunktionen zu verwenden, um eine während des jeweiligen Zeitfensters empfangene Anfrage zu beantworten;
    ◦ wobei die Objektfunktion dazu ausgebildet ist, zumindest die während des nächsten künftigen Zeitfensters zu verwendenden Antwortfunktion vorherzusagen und/oder auszugeben;
    ◦ wobei die Objektfunktion dazu ausgebildet ist, in Antwort auf den Empfang einer illegitimen Anfrage außerhalb eines von dem Prüfobjekt ausgegebenen künftigen Zeitfensters, den Zustand der Objektfunktion so zu verändern, dass die während des nächsten künftigen Zeitfensters verwendete Antwortfunktion von der für dieses Zeitfenster ausgegebenen Antwortfunktion abweicht;

- die Antwortfunktion eine Softwarefunktion ist, die die Challenge als Eingabe verwendet um die Antwort spezifisch für die Anfrage mit dieser Challenge zu berechnen.

16. Verfahren nach Anspruch 15, wobei das Prüfobjekt dazu ausgebildet ist, in Antwort auf den Empfang einer Anfrage außerhalb von ausgegebenen künftigen Zeitfenstern, die bereits für das nächste künftige Zeitfenster ausgegebene Antwortfunktion nicht mehr zu verwenden und stattdessen eine andere Antwortfunktion zur Beantwortung einer während des nächsten künftigen Zeitfensters erhaltenen Anfrage zu verwenden.

17. Verfahren nach Anspruch 15 oder 16, wobei die Objektfunktion dazu ausgebildet ist, zumindest die während des nächsten künftigen Zeitfensters zu verwendenden Antwortfunktion zu erzeugen und die erzeugte Antwortfunktion auszugeben, wobei in die erzeugte Antwortfunktion ein Zufallswert und/oder ein Zeitpunkt innerhalb des nächsten künftigen Zeitfensters eingeht.

18. Verfahren nach einem der Ansprüche, ferner umfassend:

- Initialisierung des Prüfobjekts, wobei im Zuge der Initialisierung Start und/oder Dauer der künftigen Zeitfenster spezifiziert wird; und
- In Antwort auf den Erhalt einer Antwort außerhalb der ausgegebenen künftigen Zeitfenster durch das Prüfobjekt, irreversible oder reversible Selbst-Sperrung durch das Prüfobjekt, sodass weitere Anfragen nicht oder mit einer Fehlermeldung beantwortet werden.

19. Verfahren nach einem der Ansprüche, wobei das Prüfobjekt einen Datenspeicher umfasst, ferner umfassend:

- Speicherung von einem oder mehreren Attributen, die die digitale Identität einer Person oder eines physischen Objekts ausmachen, in dem Datenspeicher des Prüfobjekts;
- Gewährung eines lesenden und/oder schreibenden Zugriff auf die Daten des Datenspeichers an das Prüfgerät durch das Prüfobjekt nur dann, wenn das Prüfgerät eine Anfrage innerhalb eines Zeitraums an das Prüfobjekt gesendet hat, für welchen das Prüfobjekt zuvor eine Antwortfunktion ausgegeben hat, die während dieses Zeitfensters auch tatsächlich zur Beantwortung der Anfrage verwendet wurde.

20. Verfahren nach einem der Ansprüche, wobei die Gesamtdauer der Zeitfenster, für welche das Prüfobjekt eine der Antwortfunktionen vorhersagt und ausgibt, weniger als 50%, vorzugweise weniger als 10% der Zeit abdeckt, während welcher das Prüfobjekt verwendet wird.

21. Ein Prüfobjekt (100), umfassend:

- eine Schnittstelle (105) zum Empfang einer Anfrage (152, 156) mit einer Challenge (151, 155) von einem Prüfgerät;
- einen Informationsspeicher (103), insbesondere ein Quantenregister, ein Analogregister oder eine Software, wobei der Informationsspeicher einen internen Zustand (101, 102) des Prüfobjekts repräsentiert, wobei der Informationsspeicher dazu ausgebildet ist, eine Antwortfunktion (122, 130, 136) zu verwenden, um eine Antwort auf die Anfrage zu erzeugen, wobei die Antwortfunktion vom internen Zustand des Prüfobjekts zum Zeitpunkt des Erhalts der Anfrage abhängt, wobei der interne Zustand und die von diesem abhängige Antwortfunktion durch Prüfobjekt-externe Objekte (150, 502) nicht vorhergesagt werden können, wobei ein Versuch, den internen Zustand oder die von dem Prüfobjekt verwendete Antwortfunktion durch Zugriff auf das Prüfobjekt festzustellen, den aktuellen internen Zustand und damit auch die von diesem abhängigen Antwortfunktion verändert, wobei das Prüfobjekt ausgebildet ist zum:

  ◦ Vorhersagen (204) eines ersten internen Zustands (101) des Prüfobjekts innerhalb eines ersten künftigen Zeitfensters (t1) und Vorhersage einer ersten Antwortfunktion (122), die das Prüfobjekt zur Beantwortung einer innerhalb des ersten künftigen Zeitfensters empfangenen ersten Anfrage in Abhängigkeit von seinem vorhergesagten ersten internen Zustand verwenden wird;
  ◦ Ausgabe (206) der vorhergesagte ersten Antwortfunktion über die Schnittstelle an das Prüfgerät, um dem Prüfgerät eine Prüfung der Integrität des Prüfobjekts innerhalb des ersten künftigen Zeitfensters unter Verwendung der ausgegebenen, vorhergesagten ersten Antwortfunktion zu ermöglichen.

22. Das Prüfobjekt (100) nach Anspruch 21, ausgewählt aus einer Gruppe umfassend:

- ein Wertdokument;

- ein Sicherheitsdokument, insbesondere ein Identitätsdokument;
- ein Tresor;
- eine Zugriffskontrolleinheit für eine zugriffsbeschränkte Hardware- oder Softwarefunktion, insbesondere für Hardware- oder Softwarefunktionen, die die Verarbeitung, den Transport oder die Verwendung gefährlicher oder geheimer physischer Objekte oder Daten betreffen;
- eine Zutrittskontrolleinheit für eine zutrittsbeschränkte Gebiete, Gebäude oder Gebäudeteile, insbesondere für Gebiete, Gebäude oder Gebäudeteile, in welchen gefährliche oder geheime physische Objekte oder Daten aufbewahrt, verarbeitet oder verwendet werden;
- ein HSM;
- ein Schutzmodul gegen DOS und insbesondere DDOS Angriffe, insbesondere ein Schutzmodul für Computer, Computernetzwerke und/oder Chipkarten.

Bezugszeichenliste

| | |
|---|---|
| 100 | Prüfobjekt |
| 101 | interner Zustand zu Zeitfenster t1 |
| 102 | interner Zustand zu Zeitfenster t2 |
| 103 | Informationsspeicher |
| 105 | Schnittstelle |
| 122 | Antwortfunktion AF1 |
| 124 | Vorhersagefunktion |
| 126 | interner Zustandswert im Zeitfenster t1 |
| 128 | erste Antwort |
| 130 | Antwortfunktion AF2 |
| 132 | interner Zustandswert im Zeitfenster t2 |
| 134 | zweite Antwort |
| 136 | Antwortfunktion AF3 |
| 150 | Prüfgerät |
| 151 | erste Challenge |
| 152 | erste Anfrage |
| 154 | Prüfung der ersten Antwort |
| 155 | zweite Challenge |
| 156 | zweite Anfrage |
| 158 | Prüfung der zweiten Antwort |
| 202-206 | Schritte |
| 302-312 | Schritte |
| 402 | Initialisierungsgerät |
| 502 | Angreifer-Gerät |
| 504 | illegitime Anfrage |

**Patentansprüche**

1. Verfahren zum Betrieb eines physischen Objektes mit prüfbarer Integrität, umfassend:

- Bereitstellung (202) eines Prüfobjektes (100) als das physische Objekt, wobei

○ das Prüfobjekt einen internen Zustand (101, 102) aufweist;
○ das Prüfobjekt dazu ausgebildet ist, eine Anfrage (152, 156) mit einer Challenge (151, 155) zu empfangen;
○ das Prüfobjekt dazu ausgebildet ist, eine Antwortfunktion (122, 130, 136) zu verwenden um eine Antwort auf die Anfrage zu erzeugen, wobei die Antwortfunktion vom internen Zustand des Prüfobjekts zum Zeitpunkt des Erhalts der Anfrage abhängt;
○ wobei der interne Zustand und die von diesem abhängige Antwortfunktion durch Prüfobjekt-externe Objekte (150, 502) nicht vorhergesagt werden können, wobei ein Versuch, den internen Zustand oder die von dem Prüfobjekt verwendete Antwortfunktion durch Zugriff auf das Prüfobjekt festzustellen, den aktuellen internen Zustand und damit auch die von diesem abhängige Antwortfunktion verändert;

- Vorhersagen (204), durch das Prüfobjekt, eines ersten internen Zustands (101) des Prüfobjekts innerhalb eines ersten künftigen Zeitfensters (t1) und Vorhersage einer ersten Antwortfunktion (122), die das Prüfobjekt zur Beantwortung einer innerhalb des ersten künftigen Zeitfensters empfangenen ersten Anfrage in Abhängigkeit von seinem vorhergesagten ersten internen Zustand verwenden wird;

- Ausgabe (206), durch das Prüfobjekt, der vorhergesagte ersten Antwortfunktion, um dem Prüfgerät eine Prüfung der Integrität des Prüfobjekts innerhalb des ersten künftigen Zeitfensters unter Verwendung der ausgegebenen, vorhergesagten ersten Antwortfunktion zu ermöglichen.

**2.** Verfahren nach Anspruch 1, ferner umfassend:

- Ausgabe, durch das Prüfobjekt, des ersten künftigen Zeitfensters, um dem Prüfgerät eine Prüfung der Integrität des Prüfobjekts innerhalb des ersten künftigen Zeitfensters zu ermöglichen.

**3.** Verfahren nach Anspruch 1 oder 2, wobei die Ausgabe der Antwortfunktion und/oder die Ausgabe des künftigen Zeitfensters, innerhalb welchem die ausgegebene Antwortfunkton von dem Prüfobjekt verwendet werden wird, nur an Prüfgeräte, die sich zuvor gegenüber dem Prüfobjekt erfolgreich authentifiziert haben, erfolgt, wobei die Ausgabe insbesondere über eine geschützte Datenverbindung erfolgt.

**4.** Verfahren nach einem der vorigen Ansprüche, ferner umfassend:

- Empfang (302) der ersten Anfrage (152) des Prüfgeräts (150) durch das Prüfobjekt (100), wobei die erste Anfrage eine erste Challenge (151) beinhaltet;
- falls die erste Anfrage innerhalb des ersten künftigen Zeitfensters (t1) empfangen wird:

  ◦ Verwenden (304) der vorhergesagten und ausgegebenen ersten Antwortfunktion (122) zum Erzeugen der ersten Antwort (128) unter Verwendung der ersten Challenge (151);
  ◦ Zurückgeben (306) der ersten Antwort (128) an das Prüfgerät, um dem Prüfgerät die Prüfung der Integrität des Prüfobjekts anhand der ersten Challenge, der ersten veröffentlichten Antwortfunktion und anhand der Antwort zu ermöglichen; und
  ◦ Ändern (308) des internen Zustands des Prüfobjekts.

**5.** Verfahren nach Anspruch 4, ferner umfassend, nachdem der interne Zustand des Prüfobjekts geändert wurde:

- Vorhersagen (310), durch das Prüfobjekt, eines zweiten internen Zustands (102) des Prüfobjekts innerhalb eines zweiten künftigen Zeitfensters (t2) und Vorhersage einer zweiten Antwortfunktion (130), die das Prüfobjekt zur Beantwortung einer innerhalb des zweiten künftigen Zeitfensters empfangenen zweiten Anfrage (156) in Abhängigkeit von seinem vorhergesagten zweiten internen Zustand verwenden wird;
- Ausgabe (312), durch das Prüfobjekt, der vorhergesagte zweiten Antwortfunktion, um dem Prüfgerät eine Prüfung der Integrität des Prüfobjekts innerhalb des zweiten künftigen Zeitfensters unter Verwendung der ausgegebenen, vorhergesagten zweiten Antwortfunktion zu ermöglichen;
- Optional zudem Ausgabe (312), durch das Prüfobjekt, des zweiten künftigen Zeitfensters, um dem Prüfgerät eine Prüfung der Integrität des Prüfobjekts innerhalb des zweiten künftigen Zeitfensters zu ermöglichen.

**6.** Verfahren nach einem der vorigen Ansprüche, ferner umfassend:

- Empfang einer illegitimen Anfrage (504), wobei eine illegitime Anfrage jede Anfrage ist, die durch das Prüfobjekt zu einem Zeitpunkt empfangen wird, der außerhalb eines von dem Prüfobjekt ausgegebenen künftigen Zeitfensters liegt und Einfluss auf den internen Zustand des Prüfobjekts hat; und
- In Reaktion auf die illegitime Anfrage, Ändern des internen Zustands des Prüfobjekts, sodass das Prüfobjekt zum nächsten künftigen Zeitfenster, für welches eine künftige Antwortfunktion vorhergesagt und ausgegeben wurde, eine andere als diese vorhergesagte und ausgegebene Antwortfunktion verwendet.

**7.** Verfahren nach Anspruch 6, ferner umfassend:

- Empfang einer legitimen Anfrage von dem Prüfgerät innerhalb eines Zeitfensters, für welches das Prüfobjekt eine legitime Antwortfunktion vorhergesagt und ausgegeben hat, wobei das legitime Zeitfenster dem Zeitpunkt des Empfangs der illegitimen Anfrage nachfolgt;
- Verwenden der anderen Antwortfunktion anstelle der ausgegebenen legitimen Antwortfunktion zum Erzeugen einer illegitimen Antwort auf die legitime Anfrage, wobei die andere Antwortfunktion eine Antwortfunktion ist, die von dem Prüfobjekt niemals oder zumindest nicht für diesen Zeitpunkt ausgegeben wurde; und
- Zurückgeben der illegitimen Antwort an das Prüfgerät.

8. Verfahren nach einem der vorigen Ansprüche, wobei:

- das Prüfobjekt einen Quantencomputer beinhaltet;
- der Quantencomputer ein Quantenregister mit mehreren Qubits beinhaltet;
- der interne Zustand des Prüfobjekts durch den Zustand des Quantenregisters bestimmt oder mitbestimmt ist;
- die Antwortfunktion ein Quantengatter ist, wobei das Quantengatter eine unitäre Operation, die auf den quantenmechanischen Zustand der Qubits des Quanten-Registers nach quantenmechanischen Prinzipien wirkt, ist;
- der Versuch, den internen Zustand oder die Antwortfunktion durch Zugriff auf das Prüfobjekt festzustellen, den Zustand des Quantenregisters dadurch verändert, dass eine Verschränkung der Qubits des Quantenregisters durch diesen Versuch beendet wird;
- die vorhergesagte und ausgegebene ersten Antwortfunktion ein erstes Quantengatter aus einer Vielzahl unterschiedlicher von dem Prüfobjekt unterstützter Quantengatter ist, welches das Prüfobjekt innerhalb des ersten künftigen Zeitfensters als die ersten Antwortfunktion verwenden wird.

9. Verfahren nach einem der vorigen Ansprüche, wobei:

- das Prüfobjekt einen Analogcomputer beinhaltet;
- der Analogcomputer dazu ausgebildet ist, Berechnungen mit Hilfe von mehreren kontinuierlichen mechanischen oder elektrischen Vorgängen durchzuführen, wobei die Vorgänge Schwingungen harmonischer Oszillatoren sind, wobei insbesondere das Überlagerungsmuster ein durch Superposition der Schwingungen der Oszillatoren erhaltenes Muster ist;
- wobei der Analogcomputer ein Analogregister beinhaltet, welches eine Überlagerung der Schwingungen enthält;
- der interne Zustand des Prüfobjekts durch den Zustand des Analogregisters bestimmt oder mitbestimmt ist;
- die ausgegebene Antwortfunktion eine Spezifikation eines Überlagerungsmusters beinhaltet, welches durch eine spezifische Auswahl der Oszillatoren deren Schwingungen während eines künftigen Zeitfensters überlagert werden sollen und/oder durch spezifische Eigenschaften der Oszillatoren deren Schwingungen während eines künftigen Zeitfensters überlagert werden sollen, erhalten wird.

10. Verfahren nach einem der vorigen Ansprüche 1-7, wobei:

- das Prüfobjekt einen klassischen Computer beinhaltet, wobei ein klassischer Computer ein Rechner ist, das mittels programmierbarer Rechenvorschriften Daten verarbeitet, wobei die Datenverarbeitung nicht mit quantenmechanischen Gesetzen sondern mit den Gesetzen der klassischen Physik und Informatik beschreibbar ist;
- auf dem klassischen Computer eine Software mit einer Objektfunktion ausgeführt wird,

  ◦ wobei die Objektfunktion den internen Zustand des Prüfobjekts repräsentiert;
  ◦ wobei die Objektfunktion dazu ausgebildet ist, während verschiedener Zeitfenster verschiedene Antwortfunktionen zu verwenden, um eine während des jeweiligen Zeitfensters empfangene Anfrage zu beantworten;
  ◦ wobei die Objektfunktion dazu ausgebildet ist, zumindest die während des nächsten künftigen Zeitfensters zu verwendenden Antwortfunktion vorherzusagen und/oder auszugeben;
  ◦ wobei die Objektfunktion dazu ausgebildet ist, in Antwort auf den Empfang einer illegitimen Anfrage außerhalb eines von dem Prüfobjekt ausgegebenen künftigen Zeitfensters, den Zustand der Objektfunktion so zu verändern, dass die während des nächsten künftigen Zeitfensters verwendete Antwortfunktion von der für dieses Zeitfenster ausgegebenen Antwortfunktion abweicht;

- die Antwortfunktion eine Softwarefunktion ist, die die Challenge als Eingabe verwendet um die Antwort spezifisch für die Anfrage mit dieser Challenge zu berechnen.

11. Verfahren nach Anspruch 10,

- wobei das Prüfobjekt dazu ausgebildet ist, in Antwort auf den Empfang einer Anfrage außerhalb von ausgegebenen künftigen Zeitfenstern, die bereits für das nächste künftige Zeitfenster ausgegebene Antwortfunktion nicht mehr zu verwenden und stattdessen eine andere Antwortfunktion zur Beantwortung einer während des nächsten künftigen Zeitfensters erhaltenen Anfrage zu verwenden; und/oder

- wobei die Objektfunktion dazu ausgebildet ist, zumindest die während des nächsten künftigen Zeitfensters zu verwendenden Antwortfunktion zu erzeugen und die erzeugte Antwortfunktion auszugeben, wobei in die erzeugte Antwortfunktion ein Zufallswert und/oder ein Zeitpunkt innerhalb des nächsten künftigen Zeitfensters eingeht.

**12.** Verfahren nach einem der vorigen Ansprüche, ferner umfassend:

- Initialisierung des Prüfobjekts, wobei im Zuge der Initialisierung Start und/oder Dauer der künftigen Zeitfenster spezifiziert wird; und
- In Antwort auf den Erhalt einer Antwort außerhalb der ausgegebenen künftigen Zeitfenster durch das Prüfobjekt, irreversible oder reversible Selbst-Sperrung durch das Prüfobjekt, sodass weitere Anfragen nicht oder mit einer Fehlermeldung beantwortet werden.

**13.** Verfahren nach einem der vorigen Ansprüche, wobei das Prüfobjekt einen Datenspeicher umfasst, ferner umfassend:

- Speicherung von einem oder mehreren Attributen, die die digitale Identität einer Person oder eines physischen Objekts ausmachen, in dem Datenspeicher des Prüfobjekts;
- Gewährung eines lesenden und/oder schreibenden Zugriff auf die Daten des Datenspeichers an das Prüfgerät durch das Prüfobjekt nur dann, wenn das Prüfgerät eine Anfrage innerhalb eines Zeitraums an das Prüfobjekt gesendet hat, für welchen das Prüfobjekt zuvor eine Antwortfunktion ausgegeben hat, die während dieses Zeitfensters auch tatsächlich zur Beantwortung der Anfrage verwendet wurde.

**14.** Ein Prüfobjekt (100), umfassend:

- eine Schnittstelle (105) zum Empfang einer Anfrage (152, 156) mit einer Challenge (151, 155) von einem Prüfgerät;
- einen Informationsspeicher (103), insbesondere ein Quantenregister, ein Analogregister oder eine Software, wobei der Informationsspeicher einen internen Zustand (101, 102) des Prüfobjekts repräsentiert, wobei der Informationsspeicher dazu ausgebildet ist, eine Antwortfunktion (122, 130, 136) zu verwenden, um eine Antwort auf die Anfrage zu erzeugen, wobei die Antwortfunktion vom internen Zustand des Prüfobjekts zum Zeitpunkt des Erhalts der Anfrage abhängt, wobei der interne Zustand und die von diesem abhängige Antwortfunktion durch Prüfobjekt-externe Objekte (150, 502) nicht vorhergesagt werden können, wobei ein Versuch, den internen Zustand oder die von dem Prüfobjekt verwendete Antwortfunktion durch Zugriff auf das Prüfobjekt festzustellen, den aktuellen internen Zustand und damit auch die von diesem abhängigen Antwortfunktion verändert, wobei das Prüfobjekt ausgebildet ist zum:

  ◦ Vorhersagen (204) eines ersten internen Zustands (101) des Prüfobjekts innerhalb eines ersten künftigen Zeitfensters (t1) und Vorhersage einer ersten Antwortfunktion (122), die das Prüfobjekt zur Beantwortung einer innerhalb des ersten künftigen Zeitfensters empfangenen ersten Anfrage in Abhängigkeit von seinem vorhergesagten ersten internen Zustand verwenden wird;
  ◦ Ausgabe (206) der vorhergesagte ersten Antwortfunktion über die Schnittstelle an das Prüfgerät, um dem Prüfgerät eine Prüfung der Integrität des Prüfobjekts innerhalb des ersten künftigen Zeitfensters unter Verwendung der ausgegebenen, vorhergesagten ersten Antwortfunktion zu ermöglichen.

**15.** Das Prüfobjekt (100) nach Anspruch 14, ausgewählt aus einer Gruppe umfassend:

- ein Wertdokument;
- ein Sicherheitsdokument, insbesondere ein Identitätsdokument;
- ein Tresor;
- eine Zugriffskontrolleinheit für eine zugriffsbeschränkte Hardware- oder Softwarefunktion, insbesondere für Hardware- oder Softwarefunktionen, die die Verarbeitung, den Transport oder die Verwendung gefährlicher oder geheimer physischer Objekte oder Daten betreffen;
- eine Zutrittskontrolleinheit für eine zutrittsbeschränkte Gebiete, Gebäude oder Gebäudeteile, insbesondere für Gebiete, Gebäude oder Gebäudeteile, in welchen gefährliche oder geheime physische Objekte oder Daten aufbewahrt, verarbeitet oder verwendet werden;
- ein HSM;

- ein Schutzmodul gegen DOS und insbesondere DDOS Angriffe, insbesondere ein Schutzmodul für Computer, Computernetzwerke und/oder Chipkarten.

**Fig. 1A**

**Fig. 1B**

Bereitstellung eines Prüfobjekts — 202

Vorhersagen, durch das Prüfobjekt, eines 1. internen Zustands des Prüfobjekts innerhalb eines 1. künftigen Zeitfensters und einer innerhalb des 1. Zeitfensters zu verwendenden 1. Antwortfunktion — 204

Ausgabe, durch das Prüfobjekt, der vorhergesagten 1. Antwortfunktion (und optional auch des 1. Zeitfensters) — 206

## Fig. 2

Empfang der 1. Anfrage mit einer 1. Challenge innerhalb des 1. Zeitfensters vom Prüfgerät — 302

Verwenden der 1. Antwortfunktion zur Bereichnung einer 1. Antwort auf Basis der 1. Challenge — 304

Rückgabe der 1. Antwort an das Prüfgerät — 306

Ändern des internen Zustands des Prüfobjekts — 308

Vorhersagen, durch das Prüfobjekt, eines 2. internen Zustands des Prüfobjekts innerhalb eines 2. künftigen Zeitfensters und einer innerhalb des 2. Zeitfensters zu verwendenden 2. Antwortfunktion — 310

Ausgabe, durch das Prüfobjekt, der vorhergesagten 2. Antwortfunktion (und optional auch des 2. Zeitfensters) — 312

## Fig. 3

**100**
Prüfobjekt

**402**
Initialisierungs-gerät

Zufallswert/
Zeitfenster/
Initialer int.
Zustand

t0

Verschränkung
erzeugt

OK!
Zu t1: verwende AF1()

Versiegeln

**150**
Prüfgerät

Beweise Integrität!

Während t1:
verwende
AF1()

t1

Verwendung AF1

AF1

Neue
Verschränkung

1. Anfrage

C1

Erzeuge C1

C1

A1

1. Antwort

A1

Prüfe A1
gegeben AF1

Während t2:
verwende
AF2()

Erzeuge C2

C2

t2

Verwendung AF2

AF2

Neue
Verschrän
-kung

2. Anfrage

C2

A2

2. Antwort

A2

Prüfe A2
gegeben AF2

Während t3:
verwende
AF3()

# Fig. 4

**100**
Prüfobjekt

**402**
Initialisierungsgerät

t0

Verschränkung
erzeugt

Zufallswert/
Zeitfenster/
Initialer int.
Zustand

OK!
während t1: verwende AF1()

Versiegeln

t1

Verwendung AF1

Neue
Verschränkung

während t2:
verwende
AF2()

**150**
Prüfgerät

**502**
Angreifer

Erzeuge C1

C1

A1

Prüfe A1
gegeben AF1

504

C1

Verschränkung
illegitim beendet

Illeg. Anfrage

(Antwort)

A1

Neue illegitime
Verschränkung

**150**
Prüfgerät

Erzeuge C2

C2

t2

Verwendung AFIL

AFIL

C2

2. Anfrage

2. Antwort
während t3:
verwende AF3()

AIL

AIL

Zustands
änderung

Prüfe A2
gegeben AF2

PRÜFOBJEKT
KORRUMPIERT!

# Fig. 5

31

Europäisches Patentamt
European Patent Office
Office européen des brevets

## EUROPÄISCHER RECHERCHENBERICHT

Nummer der Anmeldung

EP 21 16 6664

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/110571 A1 (JUNG SOUHWAN [KR] ET AL) 21. April 2016 (2016-04-21) | 1-7, 10-15 | INV. G07D7/00 |
| Y | * Zusammenfassung; Abbildungen 1-2 * <br> * Absatz [0002] - Absatz [0050] * <br> * Absatz [0066] * <br> * Absatz [0080] * <br> ----- | 8,9 | G07D7/01 <br> G07C9/00 <br> G07C9/20 <br> G06F21/31 <br> H04L9/32 |
| Y | US 2018/337792 A1 (BRINK MARKUS [US] ET AL) 22. November 2018 (2018-11-22) | 8 | G06N10/00 |
| A | * Zusammenfassung * <br> * Absatz [0004] * <br> * Absatz [0038] * <br> * Absatz [0041] * <br> * Absatz [0052] - Absatz [0053] * <br> * Absatz [0074] * <br> * Absatz [0077] * <br> * Absatz [0083] * <br> ----- | 1-7,9-15 | |
| A | TANAMOTO T ET AL: "Application of single-electron effects to fingerprints of chips", ARXIV.ORG, CORNELL UNIVERSITY LIBRARY, 201 OLIN LIBRARY CORNELL UNIVERSITY ITHACA, NY 14853, 16. April 2019 (2019-04-16), XP081169772, * das ganze Dokument * <br> ----- | 8 | |
| Y | US 9 444 618 B1 (TRIMBERGER STEPHEN M [US] ET AL) 13. September 2016 (2016-09-13) | 9 | |
| A | * Zusammenfassung; Abbildungen 1-7 * <br> * Spalte 2, Zeile 17 - Spalte 5, Zeile 36 * <br> ----- | 1-8, 10-15 | |
| A | US 2015/192637 A1 (FALK RAINER [DE] ET AL) 9. Juli 2015 (2015-07-09) * Zusammenfassung; Abbildungen 1-5 * * Absatz [0002] - Absatz [0079] * <br> ----- | 1-15 | |

RECHERCHIERTE SACHGEBIETE (IPC)

G07C
G06F
G07D
H04L
G06N

-/--

Der vorliegende Recherchenbericht wurde für alle Patentansprüche erstellt

| Recherchenort | Abschlußdatum der Recherche | Prüfer |
|---|---|---|
| Den Haag | 27. August 2021 | Holzmann, Wolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 21 16 6664

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KATZENBEISSER STEFAN ET AL: "Physical Unclonable Functions", DATENSCHUTZ UND DATENSICHERHEIT - DUD, SP GABLER VERLAG, WIESBADEN, Bd. 36, Nr. 12, 24. November 2012 (2012-11-24), Seiten 881-885, XP036497842, ISSN: 1614-0702, DOI: 10.1007/S11623-012-0295-Z [gefunden am 2012-11-24] * Tabelle 1; Seite 884 * ----- | 15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 27. August 2021 | Holzmann, Wolf |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 16 6664

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2021

| Im Recherchenbericht angeführtes Patentdokument | Datum der Veröffentlichung | Mitglied(er) der Patentfamilie | Datum der Veröffentlichung |
|---|---|---|---|
| US 2016110571 A1 | 21-04-2016 | KR 101404673 B1<br>US 2016110571 A1<br>WO 2015002368 A1 | 09-06-2014<br>21-04-2016<br>08-01-2015 |
| US 2018337792 A1 | 22-11-2018 | CN 110651329 A<br>DE 112017006931 T5<br>GB 2576274 A<br>JP 6924279 B2<br>JP 2020526005 A<br>US 2018337790 A1<br>US 2018337792 A1<br>WO 2018211320 A1 | 03-01-2020<br>10-10-2019<br>12-02-2020<br>25-08-2021<br>27-08-2020<br>22-11-2018<br>22-11-2018<br>22-11-2018 |
| US 9444618 B1 | 13-09-2016 | KEINE | |
| US 2015192637 A1 | 09-07-2015 | CN 104471583 A<br>DE 102012212471 B3<br>EP 2847707 A1<br>US 2015192637 A1<br>WO 2014012701 A1 | 25-03-2015<br>21-11-2013<br>18-03-2015<br>09-07-2015<br>23-01-2014 |

EPO FORM P0461

Für nähere Einzelheiten zu diesem Anhang : siehe Amtsblatt des Europäischen Patentamts, Nr.12/82